# EUROPÄISCHE PATENTSCHRIFT

(11) **EP 2 620 577 B1**
(45) Veröffentlichungstag und Bekanntmachung des Hinweises auf die Patenterteilung: **01.04.2015**
(21) Anmeldenummer: 13152716.0
(22) Anmeldetag: 25.01.2013
(51) Int. Cl.: E05F 15/00, B29C 65/16, B29C 65/08, B60J 10/00, F16P 3/12, H01H 3/14

(54) **Verfahren zum Verbinden eines Einklemmschutzprofils mit einem Träger, Einklemmschutzprofil und Einklemmschutzsystem**
method to join an anti-pinch profile with a support, anti-pinch profile and system
méthode de fixation d'un profilé anti-pincement sur un support, profilé et système anti-pincement

(30) Priorität: 27.01.2012 DE 102012201181
(43) Veröffentlichungstag der Anmeldung: 31.07.2013
(73) Patentinhaber: Mayser GmbH & Co. KG, 89073 Ulm (DE)
(72) Erfinder: Scherraus, Marc, 89275 Elchingen (DE)
(74) Vertreter: Patentanwälte Ruff, Wilhelm, Beier, Dauster & Partner

(56) Entgegenhaltungen:
- EP-A2- 1 715 128
- EP-A2- 2 048 014

## Beschreibung

Die Erfindung betrifft ein Verfahren zum Verbinden eines Einklemmschutzprofils aus gummielastischem Kunststoffmaterial mit einem Träger aus Kunststoffmaterial. Die Erfindung betrifft auch ein Einklemmschutzprofil und ein Einklemmschutzsystem mit einem Einklemmschutzprofil und einem Träger.

Einklemmschutzprofile werden aus gummielastischem Kunststoffmaterial hergestellt und weisen als taktile Einklemmschutzprofile zwei durch einen Hohlraum voneinander getrennte elektrische Leiter auf. Diese elektrischen Leiter bestehen üblicherweise aus leitfähigem Kunststoffmaterial, das eine Drahtlitze umgibt. Beim Zusammenpressen des Einklemmschutzprofils kommen die beiden elektrischen Leiter in Kontakt, wodurch ein Schaltsignal ausgelöst werden kann, das dann beispielsweise dazu benutzt wird, eine fremdkraftbetätigt verfahrbare Türe, beispielsweise an einer Spritzgußmaschine, abzustoppen und ggf. in der Richtung umzukehren. Darüber hinaus gibt es auch berührungslos wirkende Einklemmschutzprofile, die beispielsweise kapazitiv arbeiten. Auch bei solchen kapazitiv wirkenden Einklemmschutzprofilen sind wenigstens zwei elektrische Leiter in einem Kunststoffprofil vorgesehen, wobei ein Hindernis durch einen kapazitiven Effekt detektiert wird. Darüber hinaus können Einklemmschutzprofile sowohl taktil als auch berührungslos, beispielsweise kapazitiv, wirken. Einklemmschutzprofile können extrudiert werden, es ist beispielsweise aber auch das Herstellen von Einklemmschutzprofilen aus mehreren bandartigen Schichten möglich. Die Einklemmschutzprofile aus gummielastischem Kunststoffmaterial werden auf einen Träger aufgebracht, um dann beispielsweise an der Vorderkante einer elektrischen Schiebetür einer Spritzgußmaschine montiert zu werden. Die Befestigung der Einklemmschutzprofile auf dem Träger erfolgt üblicherweise durch Verwendung von doppelseitigem Klebeband. Die Verwendung von Klebeband ist vergleichsweise teuer und erfordert eine sorgfältige und in der Regel händische Positionierung und Befestigung des Einklemmschutzprofils auf dem Träger. Darüber hinaus führt die Verwendung von Klebeband zu einer Vergrößerung der Bauhöhe von bis zu 25%. In Einzelfällen kann die Ablösekraft des Klebebandes von etwa 40 N per Zentimeter Breite des Klebebands zu gering sein. In der Regel wird Klebeband aus Acrylatschaum verwendet, das Feuchtigkeit aufnehmen kann. Gerade beim Einsatz von kapazitiven Sensoren kann das im Klebeband enthaltene Wasser zu einer Verfälschung des Messergebnisses führen.

Aus dem deutschen Gebrauchsmuster DE 9317291 U1 ist ein zweiteiliges Einklemmschutzprofil bekannt. Ein erstes Teil des Einklemmschutzprofils soll entweder einstückig oder kraftschlüssig an einem Dichtungsprofil befestigt sein und weist eine etwa U-artige Form auf. In diesem ersten Teil soll ein zweites Teil des Einklemmschutzprofils so eingesetzt werden, dass ein geschlossener Hohlraum gebildet ist, an dessen gegenüberliegenden Seiten jeweils ein elektrischer Leiter angeordnet ist. Die beiden Teile des Einklemmschutzprofils werden zunächst ineinander eingerastet und sollen dann miteinander verklebt oder verschweißt werden.

Die europäische Offenlegungsschrift EP 1715128 A2 zeigt ein Einklemmschutzprofil aus gummielastischem Kunststoffmaterial, wobei das Einklemmschutzprofil 2, in das Kunststoffmaterial eingebettete elektrische Leiter und eine in Längsrichtung durchlaufende Hohlkammer zwischen den beiden Leitern aufweist. Eine Grundfläche des Einklemmschutzprofils wird mittels eines doppelseitigen Klebebands auf einem Träger befestigt.

Aus der europäischen Offenlegungsschrift EP 2048014 A2 ist ein Einklemmschutzprofil bekannt, das einen Halteabschnitt aufweist, der zusammen mit dem übrigen Einklemmschutzprofil extrudiert wird und der durch Anspritzen eines Trägerteilabschnitts stoffschlüssig mit dem Trägerteil verbunden ist.

Mit der Erfindung soll ein verbessertes Verfahren zum Verbinden eines Einklemmschutzprofils mit einem Träger, ein verbessertes Einklemmschutzprofil und ein verbessertes Einklemmschutzsystem mit einem Einklemmschutzprofil und einem Träger bereitgestellt werden.

Erfindungsgemäß ist hierzu ein Verfahren mit den Merkmalen von Anspruch 1, ein Einklemmschutzprofil mit den Merkmalen von Anspruch 6 und ein Einklemmschutzsystem mit den Merkmalen von Anspruch 10 vorgesehen.

Bei dem erfindungsgemäßen Verfahren wird ein Einklemmschutzprofil aus gummielastischem Kunststoffmaterial mit einem Träger aus Kunststoffmaterial verbunden, wobei das Einklemmschutzprofil wenigstens einen, in das Kunststoffmaterial eingebetteten elektrischen Leiter aufweist. Das Einklemmschutzprofil und der Träger werden fixiert, eine Vorspannkraft wird auf das Einklemmschutzprofil und den Träger ausgeübt, so dass sich wenigstens eine bandartige Kontaktfläche zwischen Einklemmschutzprofil und Träger ausbildet und das Einklemmschutzprofil und der Träger werden dann mittels Laserlicht oder Ultraschall im Bereich der bandartigen Kontaktfläche verschweißt.

Überraschenderweise können Einklemmschutzprofile aus gummielastischem Kunststoffmaterial mit einem Träger aus Kunststoffmaterial verschweißt werden, wodurch sich verschiedene Vorteile realisieren lassen. Nach dem Fixieren des Einklemmschutzprofils und des Trägers und dem Ausüben einer Vorspannkraft auf Einklemmschutzprofil und Träger bildet sich wenigstens eine bandartige Kontaktfläche zwischen Einklemmschutzprofil und Träger aus. Im Bereich dieser bandartigen Kontaktfläche können das Einklemmschutzprofil und der Träger dann mittels Laserlicht oder Ultraschall verschweißt werden. Wesentlich ist dabei die Erkenntnis, dass das Aufbringen einer Vorspannkraft auf das Einklemmschutzprofil und den Träger erforderlich ist und dass eine Verschweißung dann lediglich im Bereich einer bandartigen Kontaktfläche zwischen Einklemmschutzprofil und Träger erfolgt. Durch Aufbringen der Vorspannkraft bildet sich die bandartige Kontaktfläche aus und nach Erhitzen des Materials des Einklemmschutzprofils und des Trägers angrenzend an die Kontaktfläche verursacht die Vorspannkraft, dass sich das aufgeschmolzene Material des Einklemmschutzprofils und des Trägers miteinander vermischen und/oder ineinander eindringen und dadurch überhaupt erst eine Verschweißung ermöglichen. Wesentlich für die Erfindung ist dabei, dass die bandartige Kontaktfläche von einer Außenseite des Trägers oder des Einklemmschutzprofils her nicht oder lediglich im Bereich ihrer äußersten Ränder zugänglich ist. Mittels Laserlicht oder Ultraschall kann aber das Material durchdrungen, die zwischen dem Träger und dem Einklemmschutzprofil liegende bandartige Kontaktfläche erreicht werden und eine Verschweißung im Bereich dieser, von außen nicht oder lediglich im Bereich ihrer äußersten Ränder zugänglichen bandartigen Kontaktfläche erfolgen. Bei der Verwendung von Ultraschall führt Reibung im Bereich der bandartigen Kontaktfläche zu einer Erwärmung der Materialien des Trägers und des Einklemmschutzprofils und letztendlich zu einer Verschweißung von Träger und Einklemmschutzprofil. Bei der Verwendung von Laserlicht durchdringt das Laserlicht einen der beiden Fügepartner, also entweder den Träger oder das Einklemmschutzprofil und erwärmt den jeweils anderen Fügepartner im Bereich der bandartigen Kontaktfläche, wodurch sich letztendlich eine Verschweißung der beiden Fügepartner im Bereich der bandartigen Kontaktfläche ergibt. Wesentlich ist aber, dass gemäß der Erfindung eine Verschweißung in einem Bereich der bandartigen Kontaktfläche erfolgt, die nicht von einer Außenseite des Trägers und des Einklemmschutzprofils her zugänglich ist. Eine von der Außenseite her zugängliche Trennfuge zwischen dem Träger und dem Einklemmschutzprofil kann zusätzlich mit einer Art Schweißraupe versehen sein. Auch in diesem Fall erfolgt aber immer auch eine Verschweißung in einem von der Außenseite her nicht zugänglichen Bereich der bandartigen Kontaktfläche. In diesem, nicht zugänglichen Bereich der bandartigen Kontaktfläche kann eine erfolgreiche Verschweißung von Träger und Einklemmschutzprofil nur durch das vorherige Aufbringen einer Vorspannkraft erfolgen.

Mit dem erfindungsgemäßen Verfahren lässt sich das Aufbringen zusätzlichen Materials für die Verklebung, beispielsweise eines Klebebands, einsparen. Abschälkräfte von 100 N pro Zentimeter Breite der Schweißnaht und mehr sind problemlos erreichbar. Gegenüber dem Aufbringen eines trocknenden oder aushärtenden Klebers zum Befestigen des Einklemmschutzprofils auf dem Träger können durch das erfindungsgemäße Verfahren deutlich kürzere Taktzeiten erreicht werden. Da im Rahmen des erfindungsgemäßen Verfahrens das Fixieren des Einklemmschutzprofils und des Trägers relativ zueinander ohnehin erforderlich ist, kann das erfindungsgemäße Verfahren vollautomatisch realisiert werden. Die Qualität der Verbindung zwischen Einklemmschutzprofil und Träger wird dadurch unabhängiger von menschlicher Handarbeit, insofern als beim Verschweißen eine exakt parallele Ausrichtung der Verbindungsflächen beim Erstkontakt von Träger und Profil nicht unbedingt erforderlich ist. Auch haben Verunreinigungen, wie z.B. Handcreme oder Trennmittel, beim Verschweißen einen weniger schädlichen Einfluss als beim Verkleben. Als Träger können beispielsweise auch eine Kunststofftüre, eine Kunststoffklappe oder Verkleidungsteile dienen, mit denen das Einklemmschutzprofil unmittelbar verschweißt wird.

In Weiterbildung der Erfindung ist die bandartige Kontaktfläche kleiner als eine Auflagefläche des Einklemmschutzprofils auf dem Träger vor dem Ausüben einer Vorspannkraft.

Bei Einklemmschutzprofilen aus gummielastischem Kunststoffmaterial ergibt sich durch das Aufbringen der Vorspannkraft in der Regel eine Verformung der Auflageflächen von Einklemmschutzprofil und Träger. Die bandartige Kontaktfläche zwischen Einklemmschutzprofil und Träger nach dem Aufbringen der Vorspannkraft kann dadurch wesentlich kleiner sein als die Auflagefläche. Gemäß der Erfindung wird eine Verschweißung lediglich im Bereich der bandartigen Kontaktfläche vorgenommen.

In Weiterbildung der Erfindung weist das Einklemmschutzprofil eine in Längsrichtung durchlaufende Hohlkammer auf, wobei bei dem erfindungsgemäßen Verfahren zwei bandartige Kontaktflächen im Bereich der seitlichen Ränder des Einklemmschutzprofils ausgebildet werden und das Einklemmschutzprofil und der Träger im Bereich der beiden bandartigen Kontaktflächen verschweißt werden.

Gerade bei Einklemmschutzprofilen mit einer in Längsrichtung durchlaufenden Hohlkammer tritt der Effekt des sog. Hohldrückens des Profils auf, wenn das Einklemmschutzprofil an einen ebenen Träger angedrückt wird. Die bandartigen Kontaktflächen bilden sich dann unterhalb der steiferen Seitenwände des Einklemmschutzprofils aus. Genau im Bereich dieser beiden bandartigen Kontaktflächen muss dann eine Verschweißung mittels Laser oder Ultraschall erfolgen.

Vorteilhafterweise wird eine Hohlkehle zwischen dem Einklemmschutzprofil und dem Träger an wenigstens einem Rand einer Schweißzone in der wenigstens einen bandartigen Kontaktfläche ausgebildet. Das Ausbilden einer solchen Hohlkehle führt zu einer hochbelastbaren Schweißverbindung mit sehr guter Schäl- und Scherfestigkeit.

In Weiterbildung der Erfindung ist das Einklemmschutzprofil im Bereich seiner Grundfläche mit wenigstens einem abragenden Vorsprung versehen, wobei die wenigstens eine bandartige Kontaktfläche zwischen dem Vorsprung und dem Träger ausgebildet wird. Mittels solcher Vorsprünge am Einklemmschutzprofil kann eine in ihrer Größe definierte bandartige Kontaktfläche ausgebildet werden. Das Verschweißen erfolgt dann lediglich innerhalb der bandartigen Kontaktfläche, so dass eine sichere Verbindung gewährleistet werden kann.

Vorteilhafterweise sind am Einklemmschutzprofil zwei seitlich abragende Vorsprünge vorgesehen, wobei die seitlich abragenden Vorsprünge an den Träger angelegt werden und wobei mittels der Vorspannkraft die seitlichen Vorsprünge an den Träger angedrückt werden.

Auf diese Weise kann eine definierte und für das Einleiten von Laserlicht oder Ultraschallenergie gut zugängliche bandartige Kontaktfläche zwischen Einklemmschutzprofil und Träger bereitgestellt werden. Die Vorspannkraft kann beispielsweise mittels Rollen auf die seitlich abragenden Vorsprünge aufgebracht werden.

Vorteilhafterweise sind zwei Vorsprünge an dem Einklemmschutzprofil vorgesehen, die den Träger abschnittsweise seitlich umgreifen, wobei die Innenseiten der Vorsprünge mittels der Vorspannkraft an den Träger angedrückt werden und wobei zwischen den Innenseiten der Vorsprünge und dem Träger die bandartigen Kontaktflächen ausgebildet werden.

Das Vorsehen von zwei Vorsprüngen, die den Träger abschnittsweise seitlich umgreifen und das Vorsehen einer Verschweißung zwischen den Innenseiten der Vorsprünge und dem Träger erlaubt die Realisierung einer prozesssicher ausführbaren und hoch belastbaren Schweißverbindung. Das Laserlicht bzw. die Ultraschallenergie muss lediglich durch die seitlichen Vorsprünge hindurch zu der bandartigen Kontaktfläche gelangen, so dass eine zuverlässige Verschweißung gewährleistet werden kann. Das Andrücken der Vorsprünge kann mittels geeigneter Vorrichtungen oder beispielsweise auch mittels Rollen erfolgen.

In Weiterbildung der Erfindung wird zum Verschweißen Laserlicht mit einer Wellenlänge im Bereich zwischen 700nm und 1500nm, insbesondere 900nm bis 1200nm, verwendet.

Es hat sich herausgestellt, dass Laserlicht mit einer solchen Wellenlänge vorteilhaft zum Verschweißen von Kunststoffmaterialien verwendet werden kann und, insbesondere bei dem vorliegenden Anwendungsfall des Verschweißens eines gummielastischen Einklemmschutzprofils mit einem Träger aus Kunststoffmaterial, sehr gute und reproduzierbare Schweißergebnisse ergibt. Das Laserlicht kann beispielsweise mittels eines Diodenlasers mit einer Wellenlänge von 980nm, eines ND-YAG-Lasers oder eines Faserlasers erzeugt werden. Solche Laser stellen für eine Verschweißung ausreichende Lichtenergien zur Verfügung und sind vergleichsweise kostengünstig im Rahmen einer industriellen Produktion betreibbar.

Vorteilhafterweise ist das Anschweißen einer Dichtlippe aus thermoplastischen, gummielastischem Material an das Einklemmschutzprofil oder den Träger vorgesehen.

Auf diese Weise kann eine Doppelfunktion realisiert werden, nämlich zum einen ein Einklemmschutz und zum anderen eine Abdichtfunktion. Indem die Dichtlippe je nach vorgesehenem Anwendungsfall an das Einklemmschutzprofil oder den Träger angeschweißt wird können verschiedenste Anwendungsfälle mit nur wenigen Varianten von Einklemmschutzprofil und Träger realisiert werden.

Das der Erfindung zugrunde liegende Problem wird auch durch ein Einklemmschutzprofil aus gummielastischem Kunststoffmaterial gelöst, wobei das Einklemmschutzprofil wenigstens zwei, in das Kunststoffmaterial eingebettete Leiter aufweist, bei dem das Einklemmschutzprofil wenigstens in einem Bereich seiner Grundfläche, in dem beim Verbinden mit einem Träger eine bandartige Kontaktfläche zwischen Einklemmschutzprofil und Träger ausgebildet wird, aus einem thermoplastischen, verschweißbaren Material besteht.

Auf diese Weise sind bei dem erfindungsgemäßen Einklemmschutzprofil die Voraussetzungen geschaffen, das Einklemmschutzprofil mittels Laserlicht oder Ultraschall mit einem Träger zu verschweißen.

In Weiterbildung der Erfindung ist das Einklemmschutzprofil im Bereich seiner Grundfläche absorbierend für Laserlicht in einem Bereich zwischen 700nm und 1500nm, insbesondere 900nm bis 1200nm, ausgebildet, wobei ein Transmissionsgrad des Einklemmschutzprofils im Bereich seiner Grundfläche kleiner als 1% ist.

Das auf diese Weise absorbierend ausgestaltete Einklemmschutzprofil kann dadurch den Absorptionspartner bei einer Verschweißung mit Laserlicht bilden. Der Absorptionspartner absorbiert das eingestrahlte Laserlicht, erhitzt sich dadurch und schmilzt auf. Die entstehende Wärme führt dazu, dass im Bereich der Kontaktfläche auch der Transmissionspartner, in diesem Fall also der Träger, partiell aufgeschmolzen wird und, in Verbindung mit der aufgebrachten Vorspannkraft, Einklemmschutzprofil und Träger verschweißt werden.

In Weiterbildung der Erfindung weist das Einklemmschutzprofil im Bereich seiner Grundfläche wenigstens einen abragenden Vorsprung auf, wobei die bandartige Kontaktfläche zwischen dem wenigstens einem Vorsprung und einem Träger ausgebildet wird.

Durch Vorsehen eines Vorsprungs an dem Einklemmschutzprofil kann einen definierte bandartige Kontaktfläche geschaffen werden, wodurch eine zuverlässige Verschweißung mittels Laserlicht oder Ultraschall ermöglicht ist.

In Weiterbildung der Erfindung ragt der wenigstens eine Vorsprung im Bereich der Grundfläche seitlich und/oder nach unten ab und wenigstens der Vorsprung ist aus einem Material ausgebildet, das für Laserlicht in einem Bereich zwischen 700nm und 1500nm, insbesondere 900nm bis 1200nm, transparent ist, wobei ein Transmissionsgrad des wenigstens einen Vorsprungs größer als 2% ist.

Der Vorsprung des Einklemmschutzprofils kann dadurch den Transmissionspartner bei einer Verschweißung mittels Laserlicht bilden. Das erfindungsgemäße Einklemmschutzprofil mit dem seitlich und/oder nach unten abragenden Vorsprung ist dadurch in besonderer Weise vorteilhaft, da das Laserlicht lediglich den Vorsprung durchdringen muss, um dann die bandartige Kontaktfläche zwischen Träger und Vorsprung zu erhitzen. Durch Vorsehen der Vorsprünge können die bandartigen Kontaktflächen dadurch sehr gut mit einem Laser erreicht werden und auch das Aufbringen einer Vorspannkraft auf die Vorsprünge ist problemlos möglich. Beispielsweise können im Bereich der Grundfläche zwei nach unten abragende Vorsprünge vorgesehen sein, die den Träger dann abschnittsweise seitlich umgreifen.

Das der Erfindung zugrunde liegende Problem wird auch durch ein Einklemmschutzsystem mit einem erfindungsgemäßen Einklemmschutzprofil und einem Träger gelöst, bei dem das Einklemmschutzprofil und der Träger wenigstens im Bereich einer bandartigen Kontaktfläche zwischen Einklemmschutzprofil und Träger aus thermoplastischen Kunststoffmaterial bestehen und miteinander verschweißt sind.

In Weiterbildung der Erfindung ist das Einklemmschutzprofil oder der Träger wenigstens im Bereich der bandartigen Kontaktfläche als Transmissionspartner der Verschweißung und aus für Laserlicht in einem Bereich zwischen 700nm und 1500nm, insbesondere 900nm bis 1200nm, transparentem thermoplastischen Kunststoffmaterial ausgebildet, wobei ein Transmissionsgrad des Transmissionspartners größer als 2% ist, und bei dem der Träger bzw. das Einklemmschutzprofil wenigstens im Bereich der bandartigen Kontaktfläche als Absorptionspartner der Verschweißung und aus für Laserlicht in einem Bereich zwischen 700nm und 1500nm, insbesondere 900nm bis 1200nm, absorbierenden thermoplastischen Kunststoffmaterial ausgebildet ist, wobei ein Transmissionsgrad des Transmissionspartners kleiner als 1% ist.

Bei einer Verschweißung mittels Laserlicht muss ein Aufschmelzen des Materials des Einklemmschutzprofils und des Trägers im Bereich der bandartigen Kontaktfläche erfolgen. Es ist daher erforderlich, dass entweder das Einklemmschutzprofil oder der Träger für das verwendete Laserlicht transparent ist, so dass das Laserlicht bis zu der bandartigen Kontaktfläche zwischen Einklemmschutzprofil und Träger gelangen kann. Darüber hinaus ist erforderlich, dass der Träger bzw. das Einklemmschutzprofil absorbierend für das verwendete Laserlicht ausgebildet ist, so dass ein Aufschmelzen des Materials im Bereich der bandartigen Kontaktfläche erfolgen kann. Überraschenderweise ist es für den jeweiligen Transmissionspartner dabei ausreichend, dass ein Transmissionsgrad des Transmissionspartner größer als 2% ist, um eine zuverlässige und belastbare Verschweißung zu ermöglichen. Überraschenderweise genügt es auch, dass ein Transmissionsgrad des Transmissionspartners kleiner als 1% ist, um eine zuverlässige und belastbare Schweißverbindung zu gewährleisten.

In Weiterbildung der Erfindung ist der Träger wenigstens abschnittsweise aus Polypropylen (PP), Styrol-Copolymer, Acrylnitril-Butadien-Styrol (ABS), ABS mit Polycarbonat, Polycarbonat, Polybutylenterephtalat oder Polybutadienterephtalat (PBT), Hart-PVC oder Weich-PVC (Polyvinylchlorid) oder Polyamid (PA) gebildet und das Einklemmschutzprofil ist wenigstens abschnittsweise aus einem thermoplastischen Elastomer (TPE), Ethylenpropylenkautschuk (EPM) oder Ethylenpropylendienkautschuk (EPDM) gebildet.

Die Auswahl der Kunststoffmaterialien für Träger bzw. Einklemmschutzprofil in einer solchen Weise ermöglicht die Realisierung einer zuverlässigen und belastbaren Schweißverbindung. Die Kunststoffe für den Träger sind zweckmäßigerweise festigkeits- und/oder temperaturmodifiziert, beispielsweise durch Füllstoffe. Es ist dabei festzuhalten, dass beispielsweise das Verschweißen eines Trägers aus Ethylenpropylendienkautschuck (EPDM) mit einem Einklemmschutzprofil ebenfalls aus Ethylenpropylendienkautschuk (EPDM) nicht möglich ist. Die Kombination eines Trägers aus thermoplastischem Elastomer mit einem Einklemmschutzprofil aus Ethylenpropylendienkautschuk (EPDM) kann hingegen mittels Laserlicht oder Ultraschall im Bereich einer bandartigen Kontaktfläche verschweißt werden. Elastomere wie beispielsweise EPDM schmelzen nicht, sondern werden vor Erreichen einer Schmelztemperatur zerstört. Das Verschweißen zweier Bauteile aus EPDM oder EPM ist daher nicht möglich. Dahingegen schmelzen thermoplastische Elastomere (TPE) auf, bevor sie sich zersetzen und dadurch zerstört werden. Eine Verschweißung mittels Laserlicht oder Ultraschall von zwei Bauteilen, von denen eines aus einem thermoplastischen Elastomer (TPE) und ein anderes aus Ethylenpropylenkautschuk (EPM) oder Ethylenpropylendienkautschuk (EPDM) besteht, ist dadurch möglich. Bis vor circa 15 Jahren wurden für Einklemmschutzprofile ausschließlich konventionelle Elastomere verwendet, die sich nicht aufschmelzen lassen. Erst die Entwicklung von thermoplastischen Elastomeren mit verbesserten dynamischen Eigenschaften hat die für die Herstellung von Einklemmschutzprofilen ermöglicht.Vorteilhafterweise ist das Material des Trägers und/oder des Einklemmschutzprofils wenigstens abschnittsweise mittels Füllstoffen verstärkt.

Das Vorsehen von Füllstoffen kann die Belastbarkeit der verwendeten Kunststoffmaterialien beeinflussen und mittels solcher Füllstoffe kann auch der Transmissionsgrad der verwendeten Kunststoffmaterialien in der gewünschten Weise beeinflußt werden.

Vorteilhafterweise sind das Kunststoffmaterial des Trägers und/oder des Einklemmschutzprofils wenigstens abschnittsweise pigmentiert/ eingefärbt.

Auf diese Weise kann der Transmissionsgrad des verwendeten Kunststoffmaterials für das beim Verschweißen verwendete Laserlicht beeinflußt werden. Eine Pigmentierung/ Einfärbung ist beispielsweise auch in der Weise möglich, dass das Kunststoffmaterial für das menschliche Auge schwarz erscheint, für das zum Verschweißen verwendete Laserlicht aber transparent ist. Auf diese Weise können zwei dem menschlichen Auge schwarz erscheinende Kunststoffmaterialien miteinander verschweißt werden, wobei aber eines der Materialien für das verwendete Laserlicht transparent und das andere der Materialien für das verwendete Laserlicht absorbierend ausgebildet ist.

In Weiterbildung der Erfindung ist der Träger und/oder das Einklemmschutzprofil wenigstens abschnittsweise mit einem thermoplastischen, verschweißbaren Kunststoffmaterial, insbesondere einem thermoplastischen Elastomer (TPE), Polyamid (PA), Ethylenvinylacetat (EVA), Polyurethan (PU) oder Polypropylen (PP) beschichtet. Auf diese Weise können mittels Laserlicht oder Ultraschall auch Einklemmschutzprofile bzw. Träger miteinander verschweißt werden, die aus einem grundsätzlich nicht verschweißbaren Material bestehen. Dies erfordert zwar den zusätzlichen Vorgang einer Beschichtung oder Koextrudation. Gegenüber dem Aufbringen eines trocknenden oder aushärtenden Klebers ist ein solches Vorgehen aber dahingehend vorteilhaft, dass das für die Beschichtung verwendete thermoplastische, verschweißbare Kunststoffmaterial im nicht erhitzten Zustand nicht klebrig ist. Der Träger kann dadurch beispielsweise aus jeweils beschichtetem Alublech, Stahlblech, glasfaser- oder kohlefaserverstärktem Kunststoff gebildet sein und dadurch eine thermoplastische Kunststoffschicht tragen. Die thermoplastische Schicht kann lackiert, pulverbeschichtet, kaschiert oder laminiert sein. Die thermoplastische Schicht ist für das verwendete Laserlicht absorbierend ausgebildet.

Vorteilhafterweise ist das Einklemmschutzprofil mit Endkappen aus thermoplastischen Kunststoffmaterial versehen, wobei die bandartige Kontaktfläche und die Verschweißung zwischen Einklemmschutzprofil und Träger auch im Bereich der Endkappen ausgebildet ist.

Gegenüber der konventionellen Verwendung von Klebeband bietet die Erfindung dadurch die Möglichkeit, das Einklemmschutzprofil auch im Bereich seiner Endkappen sicher an dem Träger zu befestigen. Dies ist bei der Verwendung von Klebeband nicht oder nur bei unverhältnismäßig großem Aufwand möglich.

In Weiterbildung der Erfindung bilden die bandartige Kontaktfläche und die Verschweißung zwischen Einklemmschutzprofil und Träger wenigstens eine geschlossene Bahn.

Auf diese Weise kann verhindert werden, dass Feuchtigkeit in das Innere dieser geschlossenen Bahn eindringt und dann beispielsweise zwischen zwei bandartigen Kontaktflächen angeordnet ist. Beispielsweise wird ein Einklemmschutzprofil im Bereich zweier bandartiger Kontaktflächen mit einem Träger verschweißt und am vorderen bzw. hinteren Ende der bandartigen Kontaktflächen werden die beiden bandartigen Kontaktflächen durch eine Verschweißung miteinander verbunden. Diese Verschweißung kann beispielsweise auch im Bereich der Endkappen des Einklemmschutzprofils angeordnet sein. Im Ergebnis ergibt sich dann im Wesentlichen eine einzige bandartige Kontaktfläche, die eine umlaufende Bahn bildet und eine Verschweißung zwischen Einklemmschutzprofil und Träger findet auf dieser umlaufenden Bahn statt. Auf diese Weise wird verhindert, dass zwischen Träger und Einklemmschutzprofil Feuchtigkeit gelangt. Eingedrungene Feuchtigkeit kann beispielsweise bei Verwendung eines kapazitiv wirkenden Einklemmschutzprofils ein Messergebnis verfälschen und kann auch bei Temperaturen unter dem Gefrierpunkt Probleme bereiten.

In Weiterbildung der Erfindung ist das Einklemmschutzprofil mit wenigstens einer Kabelzuleitung versehen, wobei eine Isolierung der Kabelzuleitung wenigstens abschnittsweise mit dem Träger verschweißt ist.

Auf diese Weise kann nicht nur das Einklemmschutzprofil mittels Verschweißen sicher an dem Träger befestigt werden, sondern auch die Kabelzuleitungen. Dadurch können Kabelhalteclips und dergleichen entfallen. Kabelhalteclips können zwar beispielsweise an einen Träger mit angespritzt werden, verursachen aber in der Regel erheblichen Mehraufwand bei der Herstellung eines Spritzgusswerkzeugs für den Träger. Auch kann die Bauhöhe auf der Rückseite des Trägers auf ein Minimum reduziert werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine schematische Darstellung einer Vorrichtung zum Durchführen des erfindungsgemäßen Verfahrens,
- Fig. 2: eine Vorderansicht der Vorrichtung der Fig. 1,
- Fig. 3: eine vergrößerte Darstellung der Einzelheit III in Fig. 2,
- Fig. 4: das Einklemmschutzsystem mit Einklemmschutzprofil und Träger aus Fig. 3,
- Fig. 5: eine Darstellung eines Einklemmschutzsystems gemäß einer weiteren Ausführungsform der Erfindung,
- Fig. 6: die vergrößerte Darstellung der Einzelheit VI aus Fig. 5,
- Fig. 7: ein Einklemmschutzsystem gemäß einer weiteren bevorzugten Ausführungsform der Erfindung,
- Fig. 8: ein Einklemmschutzsystem gemäß einer weiteren bevorzugten Ausführungsform der Erfindung,
- Fig. 9: eine schematische Darstellung einer Spritzgußmaschine mit einer Schiebetür mit einem erfindungsgemäßen Einklemmschutzsystem,
- Fig. 10: eine Seitenansicht der Spritzgußmaschine der Fig. 9,
- Fig. 11: eine abschnittsweise Schnittansicht auf die Schnittebene A-A in Fig. 10
- Fig. 12: die vergrößerte Darstellung der Einzelheit B in Fig. 11,
- Fig. 13: ein erfindungsgemäßen Einklemmschutzsystem gemäß einer weiteren bevorzugten Ausführungsform,
- Fig. 14: eine abschnittsweise Schnittansicht einer Gepäckklappe eines Reisebusses mit dem erfindungsgemäßen Einklemmschutzsystem der Fig. 13,
- Fig. 15: ein Einklemmschutzsystem gemäß einer weiteren bevorzugten Ausführungsform der Erfindung,
- Fig. 16: eine abschnittsweise Schnittansicht einer Schiebetürkonstruktion mit dem Einklemmschutzsystem der Fig. 15,
- Fig. 17: ein Einklemmschutzsystem gemäß einer weiteren bevorzugten Ausführungsform der Erfindung,
- Fig. 18: eine abschnittsweise Schnittansicht einer Schiebetürkonstruktion mit dem Einklemmschutzsystem der Fig. 18,
- Fig. 19: eine abschnittsweise Schnittansicht einer Schiebetürkonstruktion mit dem Einklemmschutzsystem gemäß einer weiteren bevorzugten Ausführungsform der Erfindung,
- Fig. 20: eine Vorderansicht eines erfindungsgemäßen Einklemmschutzprofils mit einem Träger im nicht verschweißten Zustand,
- Fig. 21: eine Darstellung zur Verdeutlichung des erfindungsgemäßen Verfahrens beim Verbinden des Einklemmschutzprofils und des Trägers aus Fig. 20,
- Fig. 22: ein Einklemmschutzsystem mit dem Einklemmschutzprofil und dem Träger der Fig. 20,
- Fig. 23: eine abschnittsweise Schnittansicht einer Schiebetürkonstruktion mit dem Einklemmschutzsystem der Fig. 22,
- Fig. 24: eine abschnittsweise Schnittansicht einer Schiebetürkonstruktion mit dem Einklemmschutzsystem gemäß einer weiteren bevorzugten Ausführungsform der Erfindung,
- Fig. 25: eine Seitenansicht eines Einklemmschutzsystems gemäß einer weiteren bevorzugten Ausführungsform der Erfindung,
- Fig. 26: eine Draufsicht auf das Einklemmschutzsystem der Fig. 25,
- Fig. 27: eine Ansicht des Einklemmschutzsystems der Fig. 25 von schräg unten,
- Fig. 28: eine Ansicht des Einklemmschutzsystems der Fig. 25 von schräg oben,
- Fig. 29: eine Draufsicht auf die Schnittebene A-A in Fig. 25,
- Fig. 30: ein erfindungsgemäßes Einklemmschutzprofil und einen Träger gemäß einer weiteren bevorzugten Ausführungsform der Erfindung,
- Fig. 31: ein erfindungsgemäßes Einklemmschutzsystem mit dem Einklemmschutzprofil und dem Träger der Fig. 30
- Fig. 32: das Einklemmschutzsystem der Fig. 31 in einer Ansicht von schräg vorne,
- Fig. 33: eine Ansicht einer Vorrichtung zur Durchführung des erfindungsgemäßen Verfahrens mit dem Einklemmschutzprofil und dem Träger der Fig. 30,
- Fig. 34: eine Ansicht der Vorrichtung der Fig. 33 von vorne,
- Fig. 35: eine vergrößerte Ansicht der Einzelheit A in Fig. 34,
- Fig. 36: ein erfindungsgemäßes Einklemmschutzsystem gemäß einer weiteren bevorzugten Ausführungsform der Erfindung,
- Fig. 37: ein erfindungsgemäßes Einklemmschutzsystem gemäß einer weiteren Ausführungsform der Erfindung,
- Fig. 38: ein erfindungsgemäßes Einklemmschutzsystem bei noch nicht angeschweißtem Einklemmschutzprofil,
- Fig. 39: das Einklemmschutzprofil und den Träger der Fig. 38 im verschweißten Zustand,
- Fig. 40: eine abschnittsweise Schnittansicht einer Schiebetürkonstruktion mit einem Einklemmschutzsystem gemäß Fig. 39,
- Fig. 41: ein Einklemmschutzsystem gemäß einer weiteren bevorzugten Ausführungsform der Erfindung,
- Fig. 42: ein Einklemmschutzsystem gemäß einer weiteren bevorzugten Ausführungsform der Erfindung,
- Fig. 43: ein Einklemmschutzsystem gemäß einer weiteren bevorzugten Ausführungsform der Erfindung,
- Fig. 44: eine abschnittsweise Schnittansicht einer Klappenkonstruktion mit dem erfindungsgemäßen Einklemmschutzsystem der Fig. 43,
- Fig. 45: eine Ansicht von schräg oben eines erfindungsgemäßen Einklemmschutzsystems gemäß einer weiteren bevorzugten Ausführungsform,
- Fig. 46: eine Draufsicht auf das Einklemmschutzsystem der Fig. 45,
- Fig. 47: eine Ansicht auf die Schnittebene A-A in Fig. 46,
- Fig. 48: eine vergrößerte Darstellung der Einzelheit B in Fig. 47 und
- Fig. 49: eine vergrößerte Darstellung der Einzelheit C in Fig. 45.

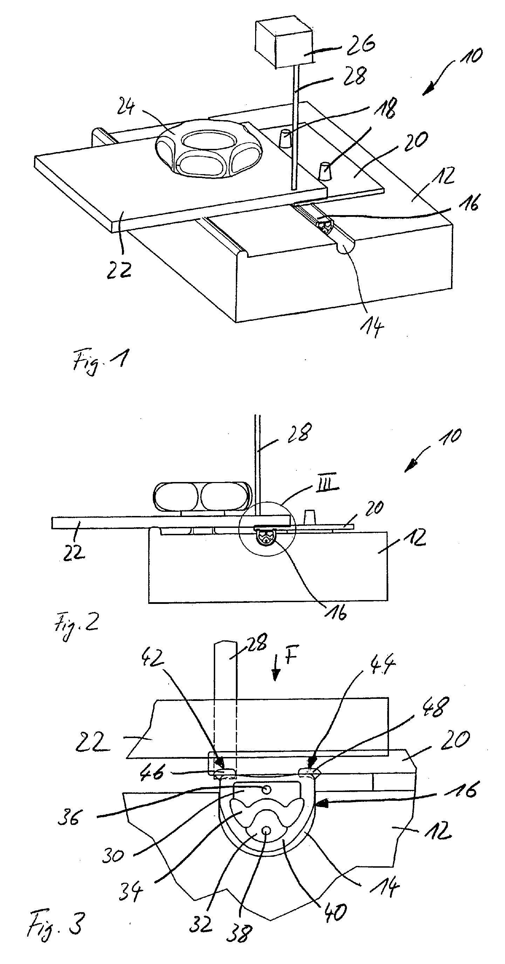

Die Darstellung der Fig. 1 zeigt in einer Ansicht von schräg oben eine Vorrichtung 10 zur Durchführung des erfindungsgemäßen Verfahrens. Die Vorrichtung 10 weist eine Matrize 12 mit einer in Längsrichtung verlaufenden Nut 14 auf, die zum Einlegen eines Einklemmschutzprofils 16 und, ähnlich wie das Einklemmschutzprofil, einen nach oben offenen, etwa halbkreisförmigen Querschnitt aufweist. Die Matrize 12 ist mit zwei Haltestiften 18 versehen, die in passende Durchgangsöffnungen eines Trägers 20 eingreifen, der mit dem Einklemmschutzprofil 16 verbunden werden soll. Der Träger 20 liegt mit einem Abschnitt seiner Unterseite auf der Oberseite des Einklemmschutzprofils 16 auf. Die Vorrichtung 10 weist weiter eine Glasplatte 22 auf, die abschnittsweise auf der Oberseite des Trägers 20 aufliegt und mit einer Feststellschraube 24, die sich durch eine Durchgangsöffnung in der Glasplatte 22 erstreckt und in ein Gewinde in der Matrize 12 eingreift, gehalten wird. Durch Drehen eines Griffes an der Befestigungsschraube 24 kann die Glasplatte 22 in Richtung auf die Matrize 12 zu- oder von dieser wegbewegt werden. Die Glasplatte 22 übt dann eine Vorspannkraft auf den Träger 20 aus und drückt diesen dadurch gegen die in der Darstellung der Fig. 1 oben liegende Unterseite des Einklemmschutzprofils 16.

Die Vorrichtung 10 ist weiter mit einem Laser 26 versehen, der einen Laserstrahl 28 ausgibt. Der vom Laser 26 erzeugte Laserlichtstrahl 28 hat eine Wellenlänge in einem Bereich zwischen 900nm und 1200nm und ist vorteilhafterweise als Dioden-Laser ausgebildet, der Licht mit einer Wellenlänge von 980nm erzeugt. Die Glasplatte 22 und der Träger 20 sind für das Licht des Laserstrahls 28 transparent ausgebildet, wohingegen das Einklemmschutzprofil 16 über dessen gesamte Länge den Laserstrahl 28 absorbiert.

Der Laser 26 oder die Matrize 12 werden zum Durchführen eines Schweißvorganges relativ zueinander verfahren, so dass mittels des Laserstrahls 28 der Träger 20 mit dem Einklemmschutzprofil 16 über dessen gesamte Länge verschweißt werden kann.

Anstelle der Glasplatte 22 und des Lasers 26 kann auch eine Sonotrode auf die in Fig. 1 oben liegende Fläche des Trägers 20 aufgesetzt werden. Mittels einer solchen Sonotrode oder mehreren Sonotroden werden Ultraschallschwingungen erzeugt, die dann an der Kontaktfläche zwischen Träger 20 und Einklemmschutzprofil 16 zu einer lokalen, starken Erwärmung und damit ebenfalls zu einer Verschweißung von Träger 20 und Einklemmschutzprofil 16 führen.

In der Darstellung der Fig. 2 ist die Vorrichtung 10 in einer Ansicht von vorne zu erkennen. Es ist zu erkennen, dass der Laserstrahl 28 die Glasplatte 22 und den Träger 20 durchtritt und dann im Bereich der Kontaktfläche zwischen Einklemmschutzprofil 16 und Träger 20 absorbiert wird. Dadurch kommt es im Bereich dieser Kontaktfläche zu einer lokalen, starken Erwärmung des Kunststoffmaterials des Einklemmschutzprofils 16, so dass dieses aufschmilzt. Durch das Erwärmen und Aufschmelzen des Materials des Einklemmschutzprofils 16 wird auch das Kunststoffmaterial des Trägers 20 im Bereich der Kontaktfläche zwischen Träger 20 und Einklemmschutzprofil 16 erwärmt und aufgeschmolzen. Durch die von der Glasplatte 22 auf den Träger 20 ausgeübte Vorspannkraft kommt es im Bereich der Kontaktfläche zwischen Träger 20 und Einklemmschutzprofil 16 dann zu einer Vermischung der beiderseitigen Materialien und nach dem Abschalten oder Weiterbewegen des Laserstrahls zu einer Abkühlung und damit zu einer Schweißnaht zwischen Träger 20 und Einklemmschutzprofil 16.

Die Darstellung der Fig. 3 zeigt die Einzelheit III in Fig. 2 in vergrößerter Darstellung. Zu erkennen ist zunächst, dass die Nut 14 in der Matrize 12 einen etwa halbkreisförmigen Querschnitt aufweist, der nicht exakt dem Querschnitt des Einklemmschutzprofils 16 entspricht. Da das Einklemmschutzprofil 16 aber aus gummielastischem Kunststoffmaterial hergestellt ist, kann das Einklemmschutzprofil 16 beim Ausüben einer Vorspannkraft F mittels der Glasplatte 22 in die Nut 14 hineingedrückt und dadurch sicher fixiert werden.

Es ist in der Darstellung der Fig. 3 weiter zu erkennen, dass die in Fig. 3 oben liegende Unterseite des Einklemmschutzprofils 16 durch die Vorspannkraft F hohl gedrückt wird und dadurch nur noch mit seinen Außenseiten an dem Träger 20 anliegt. In entspanntem Zustand, also ohne Ausüben einer Vorspannkraft F, wäre die in Fig. 3 oben liegende Unterseite des Einklemmschutzprofil 16 eben ausgebildet und läge flächig auf der in Fig. 3 unten liegenden Oberseite des Trägers 20 auf. Durch Aufbringen der Vorspannkraft F wird der Träger 20 gegen die Unterseite des Einklemmschutzprofils 16 gedrückt, so dass sich zwei bandartige Kontaktflächen längs der beiden Seitenkanten der Unterseite des Einklemmschutzprofils 16 ergeben. Diese beiden bandartigen Kontaktflächen entstehen durch die größere Steifigkeit des Einklemmschutzprofils 16 im Bereich seiner Seitenwände, verglichen mit der Steifigkeit des Einklemmschutzprofils 16 in seinem Mittenbereich.

Das Einklemmschutzprofil 16 weist zwei elektrische Leiter 30, 32 auf, die durch einen Hohlraum 34 voneinander getrennt sind. Die elektrischen Leiter 30, 32 bestehen jeweils aus extrudiertem, leitfähigem Kunststoff und weisen etwa mittig jeweils eine Drahtlitze 36, 38 auf. Die beiden elektrischen Leiter 30, 32 sind, im Querschnitt zu der Fig. 3 gesehen, von einer umlaufenden Wand 40 aus elektrisch nicht leitfähigem Kunststoff umgeben. Das Einklemmschutzprofil 16 wird extrudiert, wobei beim Extrudieren die Drahtlitzen 36, 38 mit in das Kunststoffmaterial eingeführt werden.

Wird das Einklemmschutzprofil 16 zusammengedrückt, so nähern sich die beiden elektrischen Leiter 30, 32 einander an und berühren sich letztendlich. Dadurch kann ein Schaltsignal ausgelöst werden, das dann wiederum zur Steuerung irgendeines sicherheitsrelevanten Vorgangs verwendet wird, beispielsweise um eine Antriebsbewegung einer fremdkraftbetätigten Schiebetür zu stoppen oder umzukehren.

Durch den beschriebenen Aufbau des Einklemmschutzprofils 16 weist dieses im Bereich seiner Seitenkanten eine höhere Steifigkeit auf als in seinem Mittenbereich, in dem der Hohlraum 34 angeordnet ist. Dies führt zur Ausbildung der beiden bandartigen Kontaktflächen 42, 44 zwischen Träger 20 und Einklemmschutzprofil 16 beim Ausüben einer Vorspannkraft F.

In dem in Fig. 3 dargestellten, vorgespannten Zustand dringt der Laserstrahl 28 durch die Glasplatte 22 und den Träger 20 bis zu der bandartigen Kontaktfläche 44 bzw. 42 vor und wird dann im Bereich dieser bandartigen Kontaktflächen 42, 44 von dem Kunststoffmaterial der Wandung 40 des Einklemmschutzprofils 16 absorbiert. Im Bereich der Kontaktflächen 42, 44 wird dadurch das Kunststoffmaterial der Wandung 40 des Einklemmschutzprofils 16 aufgeschmolzen und bewirkt dadurch gleichzeitig, dass auch das Kunststoffmaterial des Trägers 20 im Bereich der Kontaktflächen 42, 44 aufgeschmolzen wird. Durch die Vorspannkraft F dringen dadurch im Bereich der Kontaktflächen 42, 44 das Kunststoffmaterial der Wandung 40 des Einklemmschutzprofils 16 und des Trägers 20 ineinander ein. Nach dem Abschalten oder Weiterbewegen des Laserstrahls 28 erkalten die jeweiligen Kunststoffmaterialien und bilden eine Schweißnaht 46 bzw. 48 aus. Mit dem Laserstrahl 28 kann selbstverständlich jeweils nur eine etwa punktförmige Fläche der bandartigen Kontaktflächen 42, 44 erwärmt und verschweißt werden. Der Laserstrahl 28 und die Matrize 12 werden zum Ausführen einer bandartigen Schweißnaht dann relativ zueinander bewegt, um das Einklemmschutzprofil 16 und den Träger 20 entlang der beiden bandartigen Kontaktflächen 42, 44 miteinander zu verschweißen.

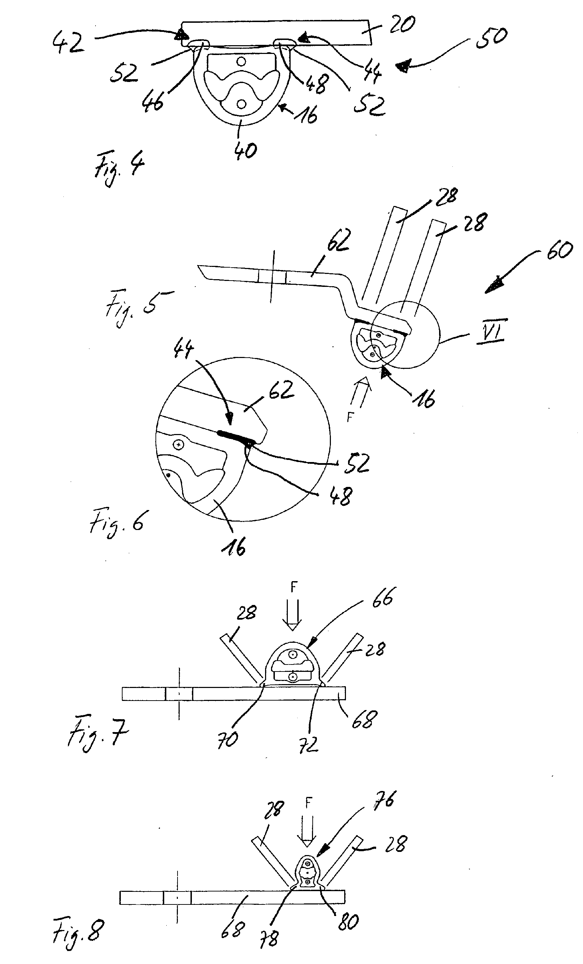

Die Darstellung der Fig. 4 zeigt ein mit dem erfindungsgemäßen Verfahren fertiggestelltes Einklemmschutzsystem 50, das aus den bereits in Fig. 1 bis 3 gezeigten Einklemmschutzprofil 16 und dem Träger 20 besteht. Wie zu erkennen ist, sind das Einklemmschutzprofil 16 und der Träger 20 im Bereich der beiden bandartigen Kontaktflächen 42, 44 durch jeweils eine ebenfalls bandartige Schweißnaht 46, 48 sicher miteinander verbunden. Die jeweils außen liegende Seite der Schweißnähte 46, 48 ist dabei jeweils in Form einer Hohlkehle 52 ausgebildet. Dies führt zu einer besonders belastbaren Schweißverbindung und speziell zu einer hohen Scherfestigkeit und Schälfestigkeit der Verbindung zwischen Einklemmschutzprofil 16 und Träger 20.

Beim Durchführen des Laserschweißvorgangs gemäß Fig. 1 bis 3 stellt der Träger 20 einen Transmissionspartner dar, dessen Transmissionsgrad für das Licht des Laserstrahls 28 größer als 2% sein muss. Das Material der Wandung 40 des Einklemmschutzprofils 16 bildet den Absorptionspartner des Schweißvorgangs, wobei ein Transmissionsgrad der Wandung 40 des Einklemmschutzprofils 16 für das Licht des Laserstrahls 28 kleiner als 1% sein muss. Sowohl der Träger 20 als auch die Wandung 40 des Einklemmschutzprofils 16 müssen aus thermoplastischen Kunststoff bestehen oder geeignet beschicht sein, um eine Laserverschweißung überhaupt zu ermöglichen. Im Falle einer Beschichtung mit thermoplastischem Kunststoff kann der Träger auch aus nicht für die Verschweißung geeigneten Materialien, beispielsweise Stahlblech, Aluminiumblech, glasfaserverstärkter Kunststoff (GFK) oder kohlefaserverstärkter Kunststoff (CFK) bestehen.

Der Träger 20 und die Wandung 40 des Einklemmschutzprofils 16 können mit Füllstoffen versehen oder auch eingefärbt bzw. pigmentiert sein, um den Transmissionsgrad dieser beiden Materialien einzustellen. Es ist dabei durchaus möglich, sowohl den Träger 20 als auch das Einklemmschutzprofil 16 so einzufärben, dass diese für das menschliche Auge schwarz oder in gleicher Farbe erscheinen. Der Transmissionsgrad für das Licht des Laserstrahls 28 im Bereich zwischen 900nm und 1200nm kann dennoch so unterschiedlich eingestellt sein, dass der Laserstrahl 28 den Träger 20 durchdringt und erst im Bereich der beiden bandartigen Kontaktflächen 42, 44 von der Wandung 40 des Einklemmschutzprofiles 16 absorbiert wird.

Das Einklemmschutzprofil 16 muss nicht notwendigerweise, wie in den Fig. 1 bis 4 dargestellt ist, als sog. taktiles Einklemmschutzprofil ausgebildet sein. Das Einklemmschutzprofil 16 kann auch berührungslos wirken, beispielsweise indem mit den elektrischen Leitern 30, 32 eine sich verändernde Kapazität erfasst wird und dadurch Hindernisse in einem Erfassungsbereich des Einklemmschutzprofil 16 detektiert werden. Auch Einklemmschutzprofile in Form von Hohlprofilen, die mit Lichtleitern arbeiten oder bei denen ein Lichtstrahl unterbrochen wird, sind geeignet.

Die Darstellung der Fig. 5 zeigt ein Einklemmschutzsystem 60 gemäß einer weiteren Ausführungsform der Erfindung. Das Einklemmschutzprofil 16 wird dabei mit einem abgewinkelten Träger 62 verschweißt. Wieder ist aber der Träger 62 als Transmissionspartner und das Einklemmschutzprofil 16 als Absorptionspartner der Verschweißung ausgebildet. Die Laserstrahlen 28 können dadurch von der in Fig. 5 oben liegenden Rückseite des Trägers 62 her durch diesen hindurch treten, um dann das Material der Wandung des Einklemmschutzprofils 16 im Bereich der beiden bandartigen Kontaktflächen zwischen Träger 62 und Einklemmschutzprofil 16 zu erwärmen. Wie in der Fig. 5 dargestellt ist, muss während des Schweißvorganges wieder eine Vorspannkraft F auf Einklemmschutzprofil 16 und Träger 62 ausgeübt werden. Der Übersichtlichkeit halber ist eine entsprechende Vorrichtung zum Ausüben der Vorspannkraft F nicht dargestellt.

Die Darstellung der Fig. 6 zeigt die Einzelheit VI aus Fig. 5 in vergrößerter Darstellung. Gut zu erkennen ist die Schweißnaht 48 zwischen Einklemmschutzprofil 16 und Träger 62 im Bereich der bandartigen Kontaktfläche 44. Die von außen her sichtbare Berandung der Schweißnaht 48, die einen Übergang zwischen der Außenseite des Einklemmschutzprofils 16 und dem Träger 62 bildet, ist wieder in Form einer Hohlkehle 52 ausgeführt, um eine gute Scherfestigkeit und Schälfestigkeit der Schweißverbindung zu erreichen.

Die Darstellung der Fig. 7 zeigt ein Einklemmschutzprofil 66, das mit einem Träger 68 verschweißt werden soll. Das Einklemmschutzprofil 66 ist im Bereich seiner in Fig. 7 unten liegenden Grundfläche mit zwei seitlich und nach unten abragenden leistenförmigen Vorsprüngen 70, 72 versehen. Die Vorsprünge 70, 72 erstrecken sich über die gesamte Länge des Einklemmschutzprofils 16 und werden bei dessen Extrusion mit hergestellt. Durch Ausüben einer Vorspannkraft F auf das Einklemmschutzprofil 66, wie in Fig. 7 dargestellt ist, werden die Vorsprünge 70, 72 gegen die in Fig. 7 oben liegende Oberseite des Trägers 68 gedrückt. Bandartige Kontaktflächen bilden sich dadurch zwischen den Unterseiten der Vorsprünge 70, 72 und der Oberseite des Trägers 68 aus. Im Bereich dieser beiden bandartigen Kontaktflächen kann dann das Einklemmschutzprofil 66 mit dem Träger 68 mittels Laserstrahlen 28 verschweißt werden.

Gemäß Fig. 7 bildet das Einklemmschutzprofil 66, bzw. dessen Vorsprünge 70, 72, den Transmissionspartner der Verschweißung, wohingegen der Träger 68 den Absorptionspartner des Schweißvorgangs bildet. Wenigstens das Material der Vorsprünge 70, 72 des Einklemmschutzprofils 66 muss somit aus einem thermoplastischen Kunststoffmaterial bestehen, das für die Laserstrahlen 28 transparent ist, wobei der Transmissionsgrad größer als 2% sein muss. Der Träger 68 bildet hingegen den Absorptionspartner des Schweißvorgangs und der Träger 68 muss aus einem thermoplastischen Kunststoffmaterial bestehen, das die Laserstrahlen 28 absorbiert, wobei der Transmissionsgrad kleiner als 1% sein muss, um eine zuverlässige, prozesssichere Schweißverbindung sicherzustellen.

Die Darstellung der Fig. 8 zeigt ein weiteres Einklemmschutzprofil 76, das mit dem Träger 68 verschweißt werden soll. Das Einklemmschutzprofil 76 weist eine im Wesentlichen ebene Grundfläche und im Bereich seiner Grundfläche zwei seitlich abragende Vorsprünge 78, 80 auf. Diese Vorsprünge 78, 80 liegen mit ihrer jeweiligen Unterseite auf dem Träger 68 auf, so dass sich unterhalb der Vorsprünge 78, 80 jeweils eine bandartige Kontaktfläche ziwschen Einklemmschutzprofil 76 und Träger 68 ausbilden wird. Die Vorsprünge 78, 80 sind von ihrer Oberseite her gut zugänglich, so dass die Laserstrahlen 28 direkt auf die Vorsprünge 78, 80 gerichtet werden können. Bei dem in Fig. 8 symbolisch dargestellten Schweißvorgang bildet das Einklemmschutzprofil 76 bzw. dessen Vorsprünge 78, 80 den Transmissionspartner, der Träger 68 dahingegen den Absorptionspartner des Schweißvorgangs.

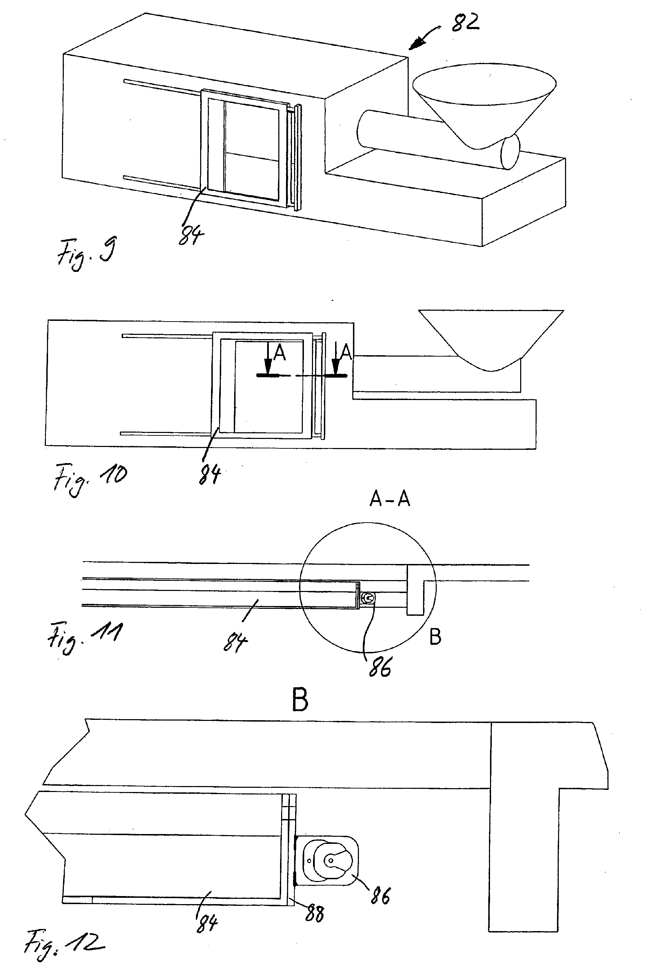

Die Darstellungen der Fig. 9 bis 12 zeigen eine Spritzgußmaschine 82 mit einer fremdkraftbetätigt, insbesondere elektromotorisch, betriebenen Schiebetür 84. Um die Spritzgußwerkzeuge im Innern der Spritzgußmaschine 82 zu inspizieren oder zu reinigen, muss ein Bediener die Schiebetür 84 öffnen. Nach Durchführen der Wartung verlässt der Bediener wieder den Innenraum der Spritzgußmaschine 82 und setzt diese in Gang. Zuvor muss die Schiebetüre 84 wieder geschlossen werden. Um zu verhindern, dass der Bediener beim Schließen der Schiebetür 84 durch diese eingeklemmt wird, ist die Schiebetür 84, siehe Fig. 11, an ihrer in Schließrichtung vorderen Kante mit einem Einklemmschutzprofil 86 versehen. Das Einklemmschutzprofil 86 ist, siehe Fig. 12, als taktiles Einklemmschutzprofil ausgebildet und weist zwei elektrische Leiter und einen zwischen den Leitern angeordneten Hohlraum auf. Das Einklemmschutzprofil 86 ist mit einem Träger 88 verschweißt, der dann auf die in Schließrichtung vordere Kante der Schiebetüre 84 aufgesetzt und dort beispielsweise mittels Schrauben befestigt ist. Zwischen dem Einklemmschutzprofil 86 und dem Träger 88 sind zwei Schweißnähte ausgebildet, die sich jeweils von den beiden Seiten der Grundfläche des Einklemmschutzprofils 86 nach innen erstrecken.

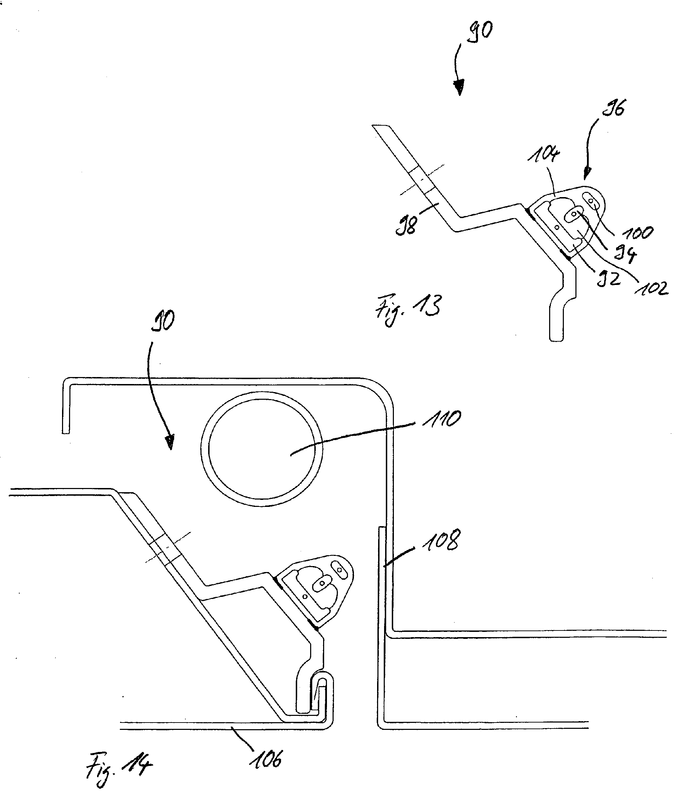

Die Darstellung der Fig. 13 zeigt ein Einklemmschutzsystem 90 gemäß einer weiteren bevorzugten Ausführungsform der Erfindung. Ein Einklemmschutzprofil 96 ist dabei mit einem Träger 98 verschweißt. Das Einklemmschutzprofil ist dabei sowohl als taktil als auch kapazitiv wirkendes Einklemmschutzprofil ausgebildet. Das Einklemmschutzprofil 96 weist drei Leiter 92, 94, 100 auf, wobei zwischen den beiden Leitern 92 und 94 ein Hohlraum 102 angeordnet ist. Zwischen dem Leiter 94 und dem Leiter 100 ist kein Hohlraum mehr angeordnet. Eine Berührung des Einklemmschutzprofils 96 kann durch einen Kontakt zwischen den Leitern 92 und 94 detektiert werden. Mittels des weiteren Leiters 100 kann eine kapazitive Erfassung von Hindernissen bewirkt werden. Das Einklemmschutzprofil 96 bildet mit seiner Wandung 104 den Absorptionspartner eines Schweißvorgangs, der Träger 98 bildet den Transmissionspartner. Die Laserstrahlen können dadurch von der in Fig. 13 links unten angeordneten Unterseite des Trägers 98 her diesen durchdringen und in den Bereich der beiden bandartigen Kontaktflächen zwischen dem Einklemmschutzprofil 96 und dem Träger 98 gelangen.

Die Darstellung der Fig. 14 zeigt eine Anwendung des Einklemmschutzsystems 90 der Fig. 13. Die Gepäckklappe 106 eines Reisebusses ist im Bereich ihrer Seitenkanten und Unterkanten mit dem Einklemmschutzsystem 90 versehen. Gerät ein Gegenstand oder eine Hand zwischen die Klappe 106 und die übrige Karosserie 108 des Busses, so kann dies mittels des Einklemmschutzsystems 90 detektiert werden und in der Folge kann ein schematisch dargestellter elektrischer Antrieb 110 der Gepäckklappe angehalten oder reversiert werden.

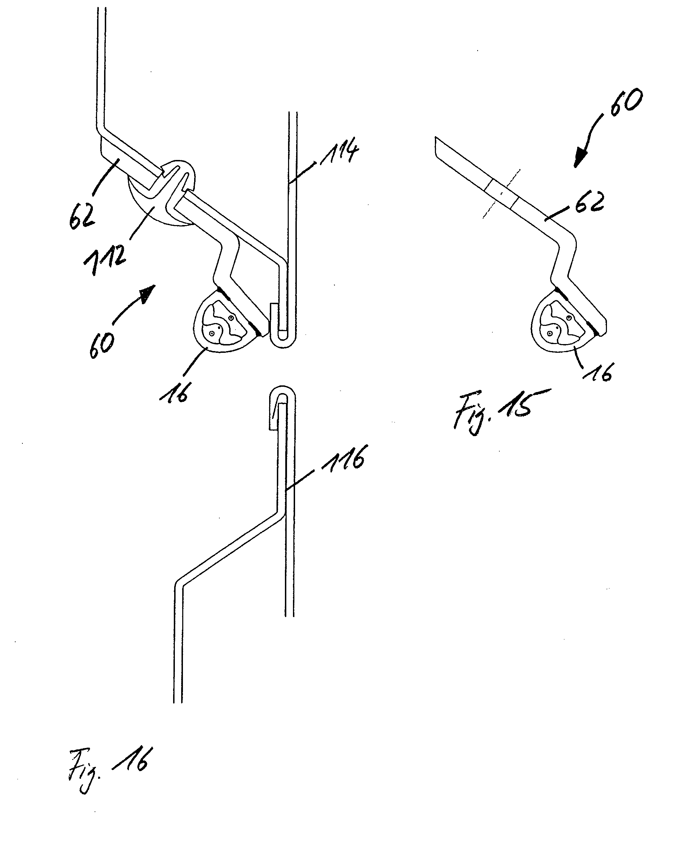

Die Darstellung der Fig. 15 zeigt das Einklemmschutzsystem 60 der Fig. 5 erneut und in Fig. 16 ist eine mögliche Anwendung für das Einklemmschutzsystem 60 dargestellt. Der Träger 62 des Einklemmschutzsystems 60 ist mittels eines Kunststoffspreizniets 112 an der in Schließrichtung vorne liegenden Kante einer Schiebetüre 114 befestigt. Bei einem Schließvorgang der Schiebetüre 114 in Richtung auf die Hinterkante einer weiteren Fahrzeugtüre 116 zu, kann ein Hindernis im Schließspalt mittels des Einklemmschutzprofils 16 detektiert werden. Ein in Fig. 16 nicht dargestellter Antrieb der Schiebetüre 114 kann dadurch angehalten oder reversiert werden.

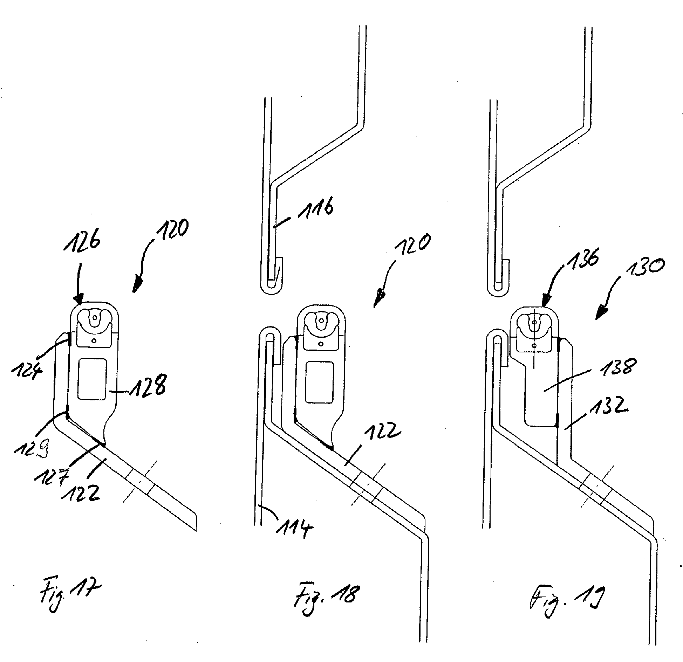

Die Darstellung der Fig. 17 zeigt ein weiteres Einklemmschutzsystem 120 gemäß einer bevorzugten Ausführungsform der Erfindung. Ein Einklemmschutzprofil 126 weist dabei einen mitextrudierten Halteabschnitt 128 auf, der mit einem Träger 122 im Bereich dreier bandartiger Kontaktflächen verschweißt ist. Der Halteabschnitt 128 des Einklemmschutzprofils 126 ist dabei so ausgebildet, dass er sich in eine Abwinklung des Trägers 122 einschmiegt. Dadurch entstehen zwischen dem Einklemmschutzprofil 126 und dem Träger 122 beim Ausüben einer Vorspannkraft drei bandartige Kontaktflächen 124, 129 und 127, wobei im Bereich dieser bandartigen Kontaktflächen 124, 129 und 127 dann eine Verschweißung vorgenommen wird und in diesen Bereichen dann Schweißnähte gebildet werden.

Die Darstellung der Fig. 18 zeigt eine mögliche Anwendung des Einklemmschutzsystems 120 an der in Schließrichtung vorne liegenden Kante einer Schiebetüre 114. Der Träger 122 ist an der in Schließrichtung vorne liegenden Kante der Schiebetüre 114 befestigt und kann dadurch Hindernisse im Schließspalt zwischen der Schiebetüre 114 und einer weiteren Türe 116 detektieren.

Ein weiteres erfindungsgemäßes Einklemmschutzsystem 130 ist in der Fig. 19 dargestellt. Das Einklemmschutzsystem 130 weist ein Einklemmschutzprofil 136 auf, das an einen Träger 132 mittels zweier Schweißnähte angeschweißt ist. Die Schweißnähte sind im Bereich bandartiger Kontaktflächen zwischen einem Halteabschnitt 138 des Einklemmschutzprofils 136 und dem Träger 132 ausgebildet.

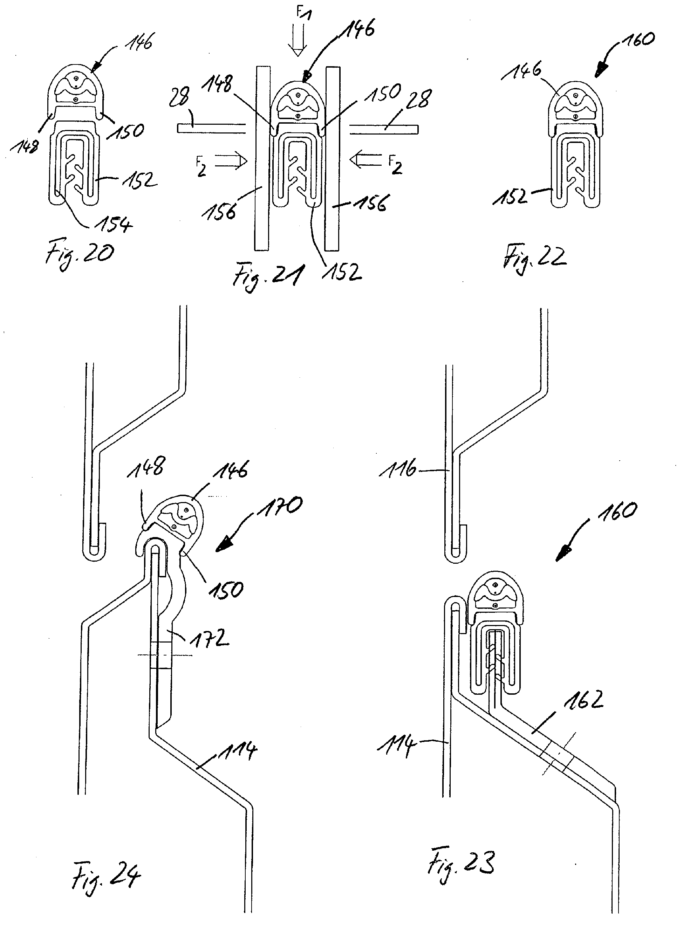

Die Darstellungen der Fig. 20 bis 22 verdeutlichen eine weitere bevorzugte Ausführungsform des erfindungsgemäßen Verfahrens und zeigen die Herstellung eines erfindungsgemäßen Einklemmschutzsystems.

Gemäß Fig. 20 ist ein Einklemmschutzprofil 146 im Bereich seiner Grundfläche mit zwei nach unten abragenden Vorsprüngen 148, 150 versehen. Die beiden Vorsprünge 148, 150 sind an der jeweiligen Außenkante der Grundfläche des Einklemmschutzprofils 146 angeordnet und verlängern dadurch die Außenwand des Einklemmschutzprofils 146 über dessen Grundfläche hinaus nach unten.

Das Einklemmschutzprofil 146 ist zur Befestigung an einem im Querschnitt U-förmigen Träger 152 vorgesehen. Der Träger 152 weist eine Umhüllung aus thermoplastischen Kunststoff und eine im Querschnitt ebenfalls U-förmige Versteifungseinlage 154 aus Stahlblech oder Stahldraht auf. Der Träger 152 ist dafür vorgesehen, auf eine freie Kante aufgeschoben und dort arretiert zu werden.

Die Darstellung der Fig. 21 zeigt schematisch das Fixieren des Einklemmschutzprofils 146 und des Trägers 152 vor und während eines Schweißvorgangs. Das Einklemmschutzprofil 146 wird mittels einer Vorspannkraft F1 von oben her auf den Träger 152 gedrückt. Gleichzeitig werden zwei Glasplatten 156 von links bzw. rechts mittels jeweils einer Vorspannkraft F2 von außen her gegen die Vorsprünge 148, 150 gedrückt, um dadurch zwischen dem Oberteil des Trägers 152 und den Innenseiten der Vorsprünge 148, 150 jeweils eine bandartige Kontaktfläche zu schaffen. Im Bereich dieser bandartigen Kontaktflächen werden dann die Innenseiten der Vorsprünge 148, 152 mit den Außenseiten des Trägers 152 mittels zweier Laserstrahlen 28 verschweißt.

Das Oberteil des Trägers 152 ist dabei größenmäßig auf die Unterseite des Einklemmschutzprofiles 148 angepaßt, so dass das Oberteil des Trägers 152 zwischen den Vorsprüngen 148,150 des Einklemmschutzprofils 146 aufgenommen werden kann.

Die Darstellung der Fig. 22 zeigt dann das fertiggestellte Einklemmschutzsystem 160 mit dem Einklemmschutzprofil 146 und dem Träger 152.

Die Darstellung der Fig. 23 zeigt das Einklemmschutzprofil 160 im eingebauten Zustand an der in Schließrichtung vorne liegenden Kante einer Schiebtüre 114, wobei die Schiebtüre 114 in Richtung auf eine weitere Türe 116 zu bewegt werden kann.

Der Träger 152 ist dabei auf einen plattenförmigen Zwischenträger 162 aufgeschoben, der wiederum an der Schiebetür 114 befestigt ist.

Die Darstellung der Fig. 24 zeigt ein weiteres Einklemmschutzsystem 170 gemäß der Erfindung. Das Einklemmschutzprofil 146 mit den beiden nach unten abragenden Vorsprüngen 148, 150 ist dabei mit einem Träger 172 verschweißt, der dann an der in Schließrichtung vorne liegenden Kante einer Schiebetüre 114 angeordnet ist.

Bei den Ausführungsformen der Fig. 20 bis 24 durchdringen die Laserstrahlen 28 während des Schweißvorganges die Vorsprünge 148, 150 am Einklemmschutzprofil 146 und werden dann jeweils von dem Kunststoffmaterial des Trägers 152 bzw. 172 absorbiert. Die Vorsprünge 148, 150 müssen daher aus für das Licht der Laserstrahlen 28 transparenten Material ausgebildet sein und bilden den Transmissionspartner des Schweißvorgangs. Der Träger 152, 172 muss hingegen aus das Licht der Laserstrahlen absorbierenden thermoplastischem Kunststoffmaterial hergestellt sein und bildet den Absorptionspartner des Schweißvorgangs.

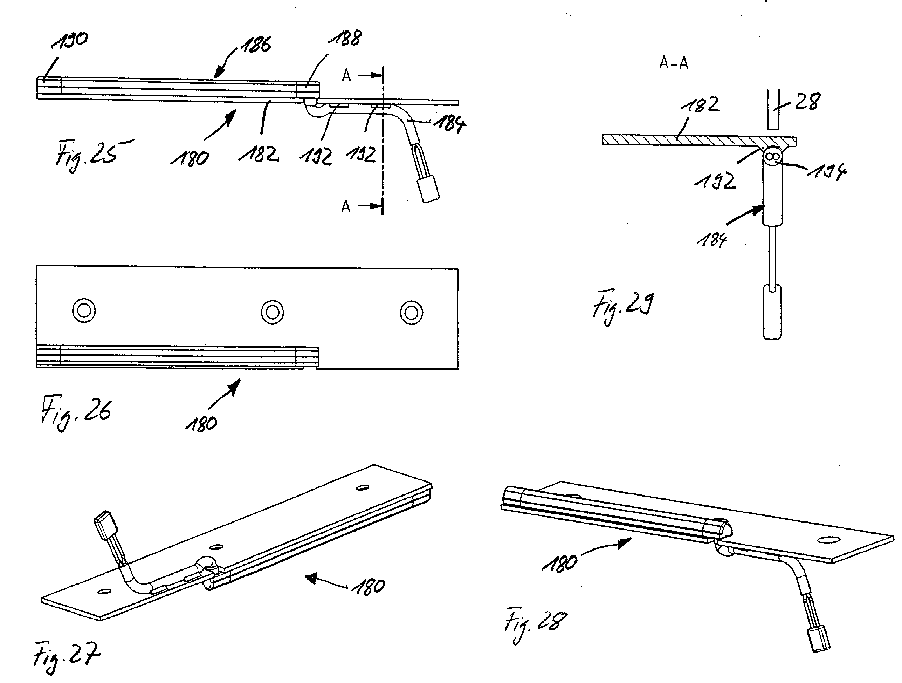

Die Darstellungen der Fig. 25 bis 29 zeigen eine weitere Ausführungsform eines erfindungsgemäßen Einklemmschutzsystem 180. Ein Einklemmschutzprofil 186 ist dabei mit zwei angespritzten Endkappen 188, 190 versehen. Mittels der angespritzten Endkappen 188,190 wird ein Hohlraum des Einklemmschutzprofils 186 verschlossen, um das Eindringen von Feuchtigkeit und Schmutz zu verhindern. Die Endkappe 190 kann darüber hinaus einen Abschlußwiderstand enthalten, der die elektrischen Leiter des Einklemmschutzprofils 186 miteinander verbindet. Im Bereich der Endkappe 188 erfolgt eine Kontaktierung der elektrischen Leiter des Einklemmschutzprofils 186 und deren Verbindung mit den Litzen einer elektrischen Zuleitung 184. Das Einklemmschutzprofil 186 ist auf einem plattenförmigen Träger 182 angeordnet und, wie bereits anhand der vorstehenden Ausführungsformen erläutert wurde, im Bereich zweier bandartiger Kontaktflächen mit dem Einklemmschutzprofil 186 verschweißt. Die elektrische Zuleitung 184 erstreckt sich entlang einer Unterseite des Trägers 182 und dann durch eine Ausnehmung im Träger 182, um dann in die Endkappe 188 hineinzulaufen. Die elektrische Zuleitung 184 muss gegen Verrutschen auf dem Träger 182 gesichert werden. In konventioneller Weise erfolgt dies durch Anspritzen von Kabelbefestigungshaken an den Träger 182. Solche Befestigungshaken können zwar einstückig mit dem Träger 182 hergestellt werden, erfordern aber sehr aufwändige Werkzeuge und erfordern vor allem auch das in der Regel manuelle Einfädeln der elektrischen Zuleitung 184 in solche Haken. Bei dem erfindungsgemäßen Einklemmschutzsystem 180 gemäß Fig. 25 ist die Mantelisolation der elektrischen Zuleitung 184, die aus thermoplastischem Kunststoff besteht, mit dem Träger 182 durch insgesamt zwei Schweißnähte 192 verbunden. Die Schweißnähte 192 werden durch eine Laserverschweißung ausgebildet und im selben Arbeitsgang wie das Verschweißen des Trägers 182 mit dem Einklemmschutzprofil 186 ausgebildet.

In der Darstellung der Fig. 29, die eine Draufsicht auf die Schnittebene A-A in Fig. 25 darstellt, ist die Schweißnaht 192 zu erkennen, die mittels eines Laserstrahls 28 ausgebildet wird und die die Mantelisolation 194 der elektrischen Zuleitung 184 mit dem Träger 182 verbindet.

In Fig. 25 ist zu erkennen, dass die elektrische Zuleitung 184 zwei Kabel aufweist, die jeweils eine innen liegende Drahtlitze und eine umhüllende elektrische Isolierung aufweisen. Die Mantelisolation 194 umgibt dann die beiden Kabel. Ein Verschweißen der Mantelisolation 194 beeinträchtigt dadurch die elektrische Isolierung der Kabelzuleitung 184 in keinster Weise. Beim Verschweißen der Mantelisolation 194 bildet der Träger 182 den Transmissionspartner und die Mantelisolation 194 den Absorptionspartner des Schweißvorgangs.

Die Darstellungen der Fig. 26 bis 28 zeigen weitere Ansichten des erfindungsgemäßen Einklemmschutzsystems 180.

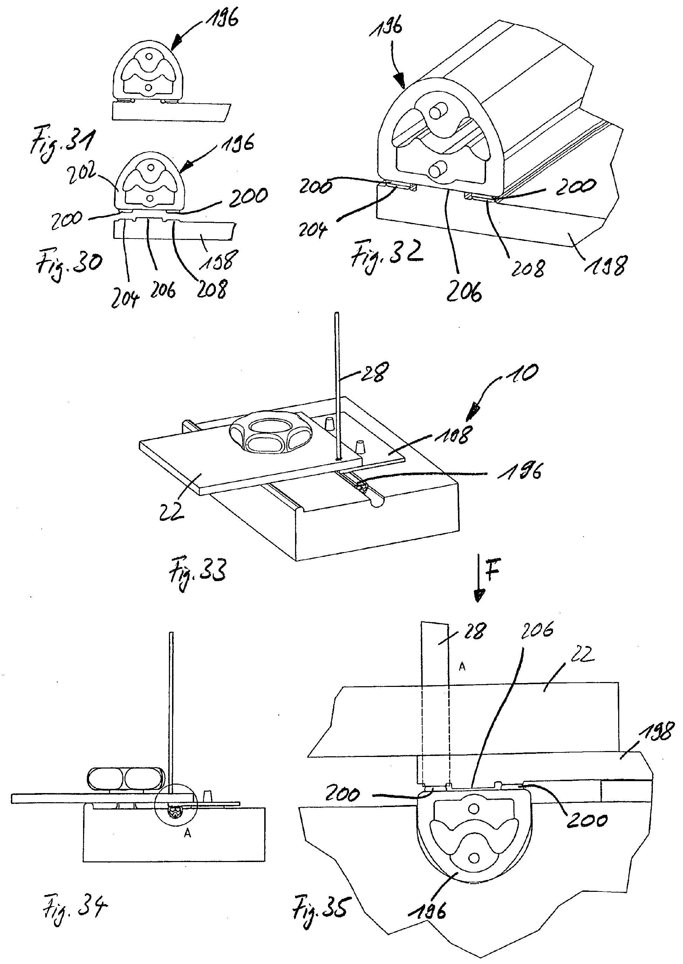

Fig. 30 zeigt ein Einklemmschutzprofil 196 gemäß einer weiteren Ausführungsform der Erfindung, das mit einem Träger 198 verbunden werden soll. Das Einklemmschutzprofil 196 weist im Bereich seiner Grundfläche zwei leistenförmige Vorsprünge 200 auf. Diese Vorsprünge 200 sind dafür vorgesehen, mit den gegenüberliegenden Auflageflächen des Trägers 198 jeweils eine bandartige Kontaktfläche auszubilden.

Die Vorsprünge 200 können in Form einer Beschichtung aus thermoplastischem Kunststoff ausgebildet sein. Dadurch wird es möglich, das Einklemmschutzprofil 196 bzw. dessen Wandung 202 aus anderen Kunststoffmaterialien auszubilden, speziell nicht thermoplastische Kunststoffe oder auch nur Kunststoffe, die sich nicht für eine Verschweißung mit dem Träger 198 eignen.

Der Träger 198 ist auf seiner, dem Einklemmschutzprofil 196 zugewandten Oberseite mit insgesamt drei leistenförmigen Vorsprüngen 204, 206 und 208 versehen. Der mittlere Vorsprung 206 ist dabei geringfügig höher als die beiden seitlich angeordneten Vorsprünge 204, 208 und gegenüber diesen Vorsprüngen auch breiter. Der Vorsprung 206 ist in seiner Höhe so bemessen, dass er bei aufgesetztem und verschweißtem Einklemmschutzprofil 196, siehe Fig. 31, an der Grundfläche des Einklemmschutzprofils 196 zwischen den beiden Vorsprüngen 200 anliegt. Die Vorsprünge 204 sind genauso breit wie die Vorsprünge 200 auf der Grundfläche des Einklemmschutzprofils 196 und sind dafür vorgesehen, mit diesen Vorsprüngen 200 verschweißt zu werden.

Eine vergrößerte Ansicht von schräg vorne ist in Fig. 32 dargestellt. Die Vorsprünge 200 des Einklemmschutzprofils 196 sind nun mit den Vorsprüngen 204 bzw. 208 des Trägers 198 verschweißt worden, indem ein Laserstrahl durch den Träger 198 hindurch zu den bandartigen Kontaktflächen zwischen den Vorsprüngen 200, 204, 208 gelangt ist. Der mittlere Vorsprung 206 am Träger 198 verhindert dann, dass sich die Schweißnaht unkontrolliert über die Grundfläche des Einklemmschutzprofils 196 ausbreitet. Dies ist besonders dann sinnvoll, wenn die Vorsprünge 200 aus thermoplastischem Kunststoff bestehen, der beim Aufschmelzen mittels Laserstrahl dünnflüssig wird.

Die Darstellung der Fig. 33 zeigt die Vorrichtung 10 der Fig. 1, wobei nun das Einklemmschutzprofil 196 und der Träger 198 der Fig. 31 bis 32 eingelegt sind. Ein Laserstrahl 28 dringt von oben her durch die Glasplatte 22, durch den Träger 198 hindurch und auf die Vorsprünge 200 auf der Grundfläche des Einklemmschutzprofils 196, siehe Fig. 35. Während des Schweißvorgangs wird die Glasplatte 22 mit einer Vorspannkraft F gegen den Träger 198 und das Einklemmschutzprofil 196 gedrückt. Die Darstellung der Fig. 35 zeigt den Zustand, bevor der Laserstrahl 28 das Kunststoffmaterial der Vorsprünge 200 am Einklemmschutzprofil 196 erweicht bzw. aufschmilzt. In diesem Zustand liegt zwischen dem mittleren Vorsprung 206 des Trägers 198 und der Grundfläche des Einklemmschutzprofils 196 zwischen den Vorsprüngen 200 noch ein geringer Abstand. Wird das Material der Vorsprünge 200 am Einklemmschutzprofil 126 dann weich, da diese das Licht des Laserstrahls 28 absorbieren, so wird sich der Träger durch die Vorspannkraft F soweit in Richtung auf das Einklemmschutzprofil 196 zu bewegen, bis der Vorsprung 206 an der Grundfläche des Einklemmschutzprofils 196 anliegt und dann der Zustand der Fig. 31 und 32 erreicht ist.

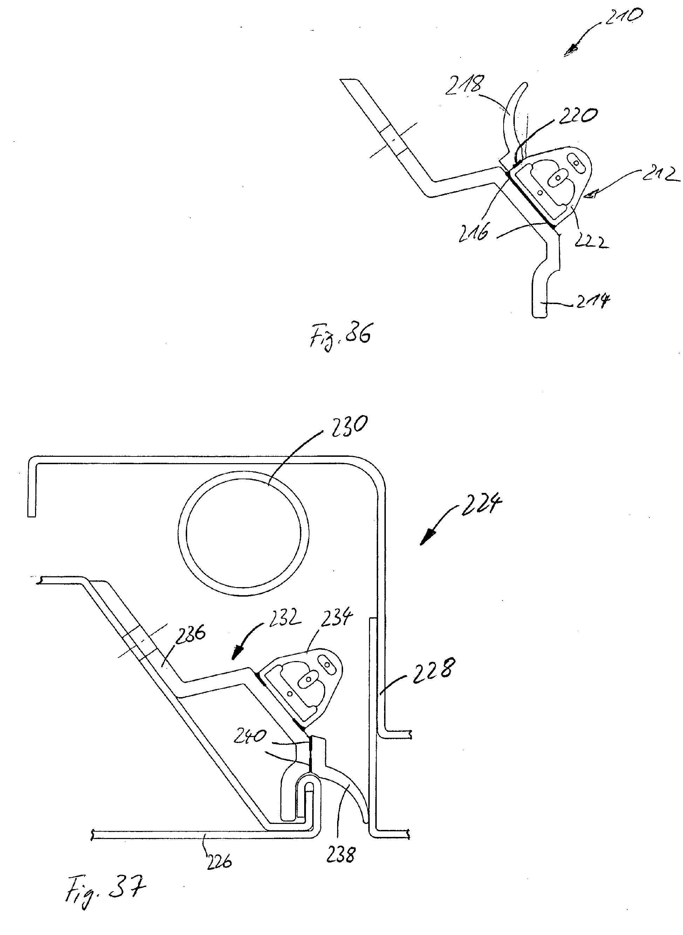

Die Darstellung der Fig. 36 zeigt in einer Ansicht von vorne ein erfindungsgemäßes Einklemmschutzsystem 210 gemäß einer weiteren bevorzugten Ausführungsform der Erfindung. Das Einklemmschutzsystem 210 weist ein Einklemmschutzprofil 212 und einen Träger 214 auf. Das Einklemmschutzprofil 212 ist im Bereich zweier bandartiger Kontaktflächen 216 mit dem Träger 214 verschweißt.

Weiterhin ist eine Dichtlippe 218 vorgesehen, die an dem Einklemmschutzprofil 212 befestigt ist und von diesem abragt. Die Dichtlippe 218 ist im Bereich einer bandartigen Kontaktfläche 220 mit der Außenwand des Einklemmschutzprofils 212 verschweißt. Das Material 222 der Wandung des Einklemmschutzprofils 212 besteht aus thermoplastischem, gummielastischem Kunststoff, der für Laserlicht, beispielsweise Laserlicht eines Diodenlasers mit einer Wellenlänge von 980nm, absorbierend ist. Die Dichtlippe 218 besteht ebenfalls aus thermoplastischem, gummielastischem Kunststoffmaterial, ist aber für das bei der Verschweißung verwendete Laserlicht transparent ausgebildet. Beim Verschweißen der Dichtlippe 218 mit der Außenfläche des Einklemmschutzprofils 212 bildet dadurch das Material 222 der Wandung des Einklemmschutzprofils 212 den Absorptionspartner, das Material der Dichtlippe 218 den Transmissionspartner der Verschweißung. Beim Verschweißen des Einklemmschutzprofils 212 mit dem Träger 214 bildet das Material 222 der Wandung des Einklemmschutzprofils 212 den Absorptionspartner und das thermoplastische Kunststoffmaterial des Trägers 214 den Transmissionspartner der Verschweißung. Die beiden bandartigen Kontaktflächen 216 zwischen Einklemmschutzprofil 212 und Träger 214 sind zu einem geschlossenen Band verbunden, so dass also auch am vorderen und hinteren Ende der beiden bandartigen Kontaktflächen eine Verschweißung quer zur Längsrichtung vorgenommen wurde. Die Verschweißung bildet dadurch ein geschlossenes Rechteck, in dessen Innenraum keine Feuchtigkeit mehr eindringen kann. Wird das Einklemmschutzprofil 212 als kapazitiver Sensor betrieben, kann infolgedessen auch kein, zwischen Einklemmschutzprofil 212 und Träger 214 eingedrungenes Wasser das Messergebnis verfälschen.

Mit dem in Fig. 36 gezeigten erfindungsgemäßen Einklemmschutzsystem ist es möglich, je nach vorgesehenem Anwendungsfall die Dichtlippe 218 vorzusehen. Gerade bei Kleinserien oder wenn das Einklemmschutzprofil 212 zusammen mit der Dichtlippe 218 nicht ohne Weiteres einstückig hergestellt werden kann, bietet die Erfindung dadurch erhebliche Vorteile.

Die Darstellung der Fig. 37 zeigt eine abschnittsweise Schnittansicht einer Klappenkonstruktion 224. Eine Klappe, beispielsweise die Gepäckklappe 226 eines Reisebusses, ist in die Öffnung einer Karosserie 228 eingepasst und kann fremdkraftbetätigt mit einem Antrieb 230 geöffnet und geschlossen werden. Auf einer nach innen gerichteten, abgeschrägten Fläche der Klappe 226 ist ein erfindungsgemäßes Einklemmschutzsystem 232 mit einem Einklemmschutzprofil 234 und einem Träger 236 vorgesehen. Der Träger 236 und das Einklemmschutzsystem 234 sind miteinander verschweißt.

Um den Spalt zwischen der Klappe 226 und der Öffnung in der Karosserie 228 abzudichten, ist am Träger 236 eine Dichtlippe 238 vorgesehen, die diesen Dichtspalt überbrückt. Die Dichtlippe 238 ist mit dem Träger 236 im Bereich zweier bandartiger Kontaktflächen 240 verschweißt. Das Verschweißen des Trägers 236 mit der Dichtlippe 238 geschieht dabei in gleicher Weise wie das vorstehend beschriebenen Verschweißen des Einklemmschutzprofils 234 mit dem Träger 236, beispielsweise mittels Laserlicht oder Ultraschall.

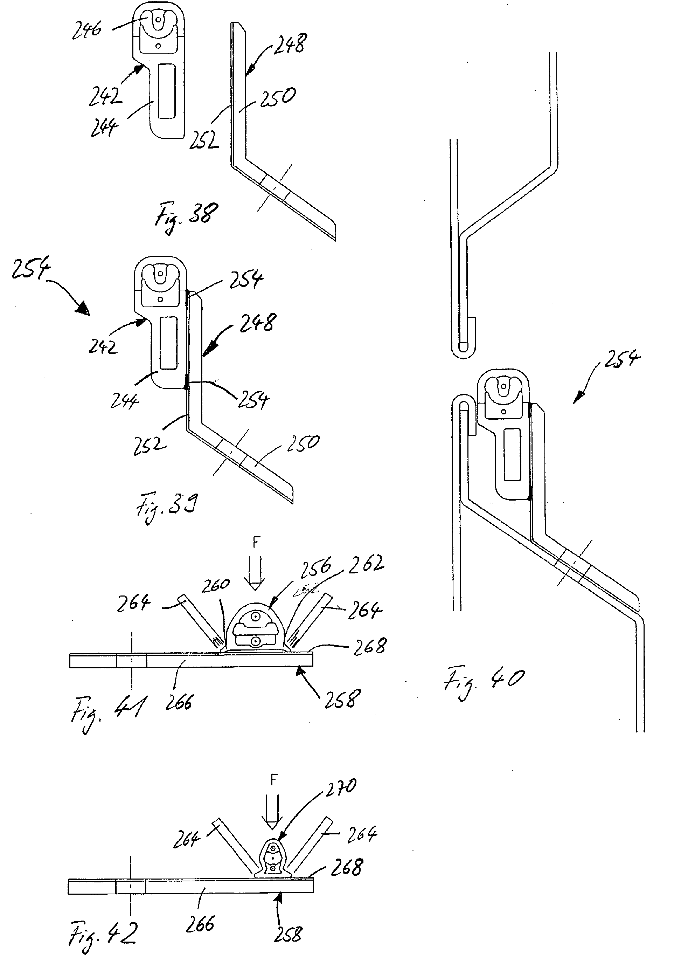

Die Darstellung der Fig. 38 zeigt ein erfindungsgemäßes Einklemmschutzprofil 242, das einen Befestigungsabschnitt 244 aufweist, der unterhalb einer Hohlkammer 246 des Einklemmschutzprofils 242 angeordnet ist. Der Befestigungsabschnitt 244 dient zur Befestigung des Einklemmschutzprofils 242 an einem Träger 248. Der Träger 248 besteht aus einer abgewinkelten Platte 250, die an ihrer, dem Einklemmschutzprofil 242 zugewandten Seite mit einer Beschichtung 252 versehen ist. Sowohl der Befestigungsabschnitt 244 als auch die Beschichtung 252 bestehen aus thermoplastischem Kunststoff und können miteinander verschweißt werden.

Die Darstellung der Fig. 39 zeigt ein erfindungsgemäßes Einklemmschutzsystem 254 mit dem Einklemmschutzprofil 242 und dem Träger 248 aus Fig. 38. Der Befestigungsabschnitt 244 und die Beschichtung 252 des Trägers 248 sind nun im Bereich zweier bandartiger Kontaktflächen 254 miteinander verschweißt. Die Schweißverbindung ist dabei zwischen dem Befestigungsabschnitt 244 und der Beschichtung 252 ausgebildet. Das Material der Grundplatte 250 des Trägers 248 kann dadurch aus nicht verschweißbarem Material bestehen, beispielsweise aus für Laserlicht transparentem Kunststoff. Im Falle einer Verschweißung mittels Laserlicht sind dadurch die Grundplatte 250 und die Beschichtung 252 des Trägers 248 transparent für Laserlicht ausgebildet, wohingegen der Befestigungsabschnitt 244 des Einklemmschutzprofils 242 für das Laserlicht absorbierend ausgebildet ist.

Die Darstellung der Fig. 40 zeigt eine abschnittsweise Schnittansicht einer Schiebetürkonstruktion mit dem erfindungsgemäßen Einklemmschutzsystem 254 der Fig. 39.

Die Darstellung der Fig. 41 zeigt ein erfindungsgemäßes Einklemmschutzsystem mit einem Einklemmschutzprofil 256 und einem Träger 258, wobei der Zustand des Verschweißens von Einklemmschutzprofil 256 und Träger 258 dargestellt ist. Das Einklemmschutzprofil 256 ist in gleicher Weise wie das Einklemmschutzprofil 66 in Fig. 7 ausgebildet und weist im Bereich seiner Grundfläche zwei seitlich und nach unten abragende Vorsprünge 260, 262 auf. Die Vorsprünge 260, 262 sind aus für Laserlicht 264, beispielsweise Laserlicht eines Diodenlasers mit einer Wellenlänge von 980nm, transparent ausgebildet. Eine Vorspannkraft F drückt während des Schweißvorgangs das Einklemmschutzprofil 256 in Richtung auf den Träger 258, so dass sich zwischen einer Unterseite der Vorsprünge 262, 260 und der Oberseite des Trägers 258 jeweils eine bandartige Kontaktfläche ausbildet.

Der Träger 258 besteht aus einer Grundplatte 266, die auf ihrer, dem Einklemmschutzprofil 256 zugewandten Oberseite mit einer Beschichtung 268 versehen ist. Die Beschichtung 268 besteht aus thermoplastischem Kunststoff und ist für das bei der Verschweißung verwendete Laserlicht 264 absorbierend ausgebildet. Die Beschichtung 268 kann dabei beispielsweise durch Lackieren, Pulverbeschichten, Laminieren oder Kaschieren auf die Grundplatte 266 des Trägers 258 aufgebracht werden. Das Material der Grundplatte 266 des Trägers 258 kann dadurch beliebig gewählt werden und beispielsweise Stahlblech, Aluminiumblech, glasfaserverstärkter Kunststoff (GFK) oder kohlefaserverstärkter Kunststoff (CFK) sein. Der Träger 258 kann dadurch beispielsweise Bestandteil einer Tür oder Klappe sein, und das Einklemmschutzprofil 256 kann unmittelbar auf die Tür oder Klappe aufgeschweißt werden.

Die Darstellung der Fig. 42 zeigt ein Einklemmschutzprofil 270, das gleich wie das Einklemmschutzprofil 76 der Fig. 8 aufgebaut ist. Der Träger 258 besteht wieder aus der Grundplatte 266 und der Beschichtung 268. Das Einklemmschutzprofil 270 kann, während die Vorspannkraft F aufgebracht wird, mittels Laserlicht 264 mit der Beschichtung 268 der Grundplatte 266 des Trägers 258 verschweißt werden.

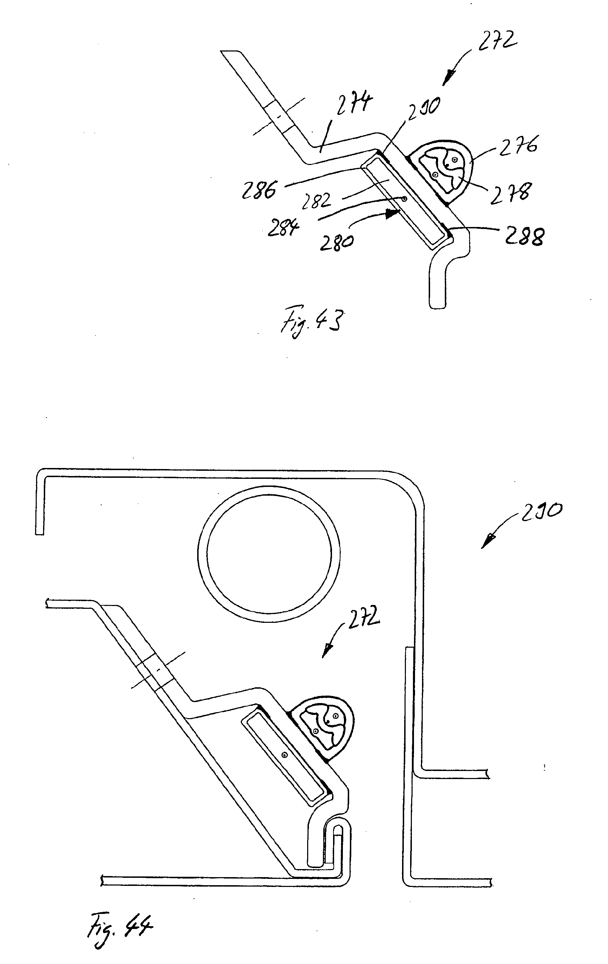

Die Darstellung der Fig. 43 zeigt ein Einklemmschutzsystem 272 gemäß einer weiteren Ausführungsform der Erfindung. Das Einklemmschutzsystem 272 weist einen Träger 274 und ein Einklemmschutzprofil 276 auf, das mit einer in Fig. 43 rechts liegenden Vorderseite des Trägers 274 verschweißt ist. Das Einklemmschutzprofil 276 weist einen Hohlraum 278 und zwei an den Hohlraum angrenzende elektrische Leiter auf. Jeder der elektrischen Leiter ist mit einer Drahtlitze versehen. Das Einklemmschutzprofil 276 kann als taktiler Sensor verwendet werden, so dass also ein Zusammenpressen des Einklemmschutzprofils 276 über einen Kontakt der beiden elektrischen Leiter detektiert wird.

Das Einklemmschutzprofil 276 kann auch als kapazitiv wirkender Sensor eingesetzt werden, auch gleichzeitig mit seiner Funktion als taktiler Sensor. Für den Einsatz als kapazitiver Sensor wirken die elektrischen Leiter des Einklemmschutzprofils 276 mit einem weiteren Leiterprofil 280 zusammen, das auf einer Rückseite des Trägers 274, die dem Einklemmschutzprofil 276 gegenüberliegt, mit dem Träger 274 verschweißt ist. Das Leiterprofil 280 weist einen elektrischen Leiter 282 auf, der mit einer Drahtlitze 284 versehen ist. Der elektrische Leiter 282 ist von einer Isolierung aus thermoplastischem Kunststoff 286 umgeben, die dann mit dem thermoplastischem Kunststoff des Trägers 274 verschweißt wird. Werden das Einklemmschutzprofil 276 und das Leiterprofil 280 als kapazitiver Sensor eingesetzt, so kann das Leiterprofil 280 beispielsweise als Ground-Elektrode eingesetzt werden.

Das Leiterprofil 280 ist im Bereich zweier bandartiger Kontaktflächen 288, 290 mit dem Träger 274 verschweißt, wobei diese bandartigen Kontaktflächen 288, 290 quer zur Längsrichtung des Einklemmschutzprofils 276 seitlich außerhalb des Einklemmschutzprofils 276 liegen. Die Längsrichtung des Einklemmschutzprofils 276 steht in der Darstellung der Fig. 43 senkrecht auf der Zeichenebene.

Der Träger 274 ist für das beim Verschweißen verwendete Laserlicht transparent ausgebildet, wohingegen die Wandung des Einklemmschutzprofils 276 und die Isolierung 286 des Leiterprofils 280 für das verwendete Laserlicht absorbierend ausgebildet sind.

Beim Herstellen des Einklemmschutzsystems 272 wird zunächst das Einklemmschutzprofil 276 von der in Fig. 43 links liegenden Rückseite des Trägers 274 her mit dem Träger 274 verschweißt. Das Laserlicht kann durch den transparenten Träger 274 hindurch treten, wird im Bereich der beiden bandartigen Kontaktflächen von dem Material der Wandung des Einklemmschutzprofils 276 absorbiert, so dass ein Schweißvorgang bewirkt wird.

Zum Befestigen des Leiterprofils 280 wird dieses von der in Fig. 43 links liegenden Unterseite des Trägers 274 her gegen den Träger 274 gedrückt. Das Laserlicht kann dann in Fig. 43 oberhalb und unterhalb des Einklemmschutzprofils 276 an diesem vorbei durch den Träger 274 hindurch treten und wird dann im Bereich der beiden bandartigen Kontaktflächen 288, 290 von dem absorbierenden Material der Isolierung 286 des Leiterprofils 280 absorbiert.

Die beiden bandartigen Kontaktflächen 288, 290 müssen infolgedessen weiter voneinander beabstandet sein, als das Einklemmschutzprofil 276 breit ist. Infolgedessen muss auch das Leiterprofil 280 breiter sein als das Einklemmschutzprofil 276, um die vorstehend erläuterte Verschweißung von zwei unterschiedlichen Seiten des Trägers her zu ermöglichen.

Umgekehrt kann selbstverständlich auch das Einklemmschutzprofil 276 breiter ausgebildet sein als das Leiterprofil 280, wobei in diesem Fall dann zunächst das Leiterprofil 280 von einer ersten Seite des Trägers her verschweißt würde und danach das Einklemmschutzprofil 276 von der anderen Seite des Trägers her verschweißt würde.

Die Darstellung der Fig. 44 zeigt eine Klappenkonstruktion 290 mit dem Einklemmschutzsystem 272 der Fig. 43. Die Klappenkonstruktion 290 ist gleich aufgebaut wie die anhand der Fig. 37 erläuterte Klappenkonstruktion 224, lediglich das Einklemmschutzsystem 232 der Fig. 37 ist durch das Einklemmschutzsystem 272 ersetzt, das sowohl als taktiler Sensor als auch als kapazitiver Sensor arbeiten kann.

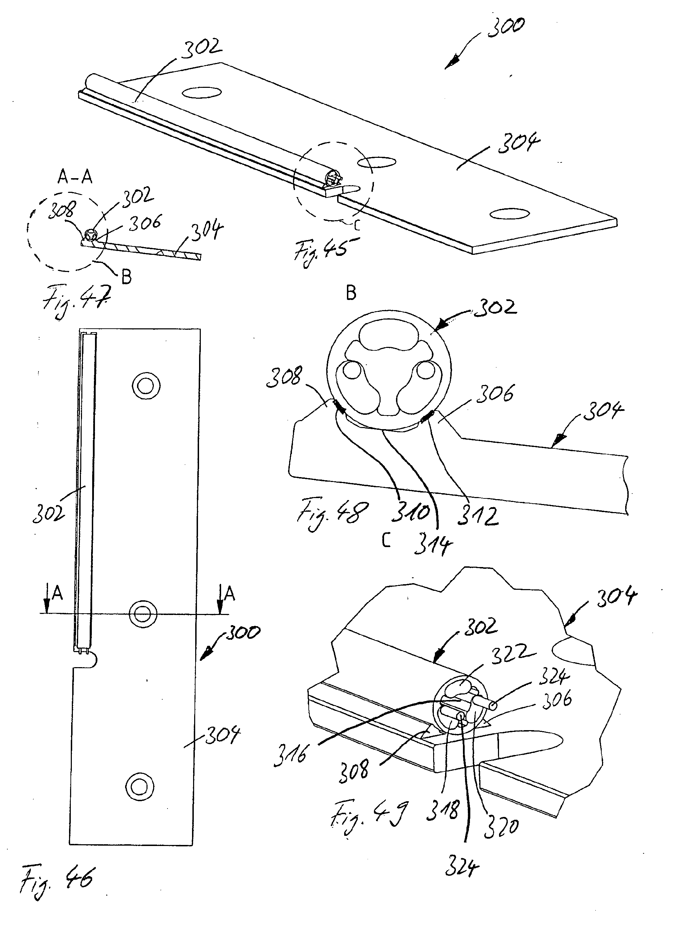

Die Darstellung der Fig. 45 zeigt ein erfindungsgemäßes Einklemmschutzsystem 300 gemäß einer weiteren bevorzugten Ausführungsform der Erfindung. Das Einklemmschutzsystem 300 weist ein im Querschnitt kreisförmiges, langgestrecktes Einklemmschutzprofil 302 auf, das auf einem plattenförmigen Träger 304 angeordnet und im Bereich zweier bandförmiger Kontaktflächen mit dem Träger 304 verschweißt ist. Die Darstellung der Fig. 46 zeigt eine Draufsicht auf das Einklemmschutzsystem 300. In der Ansicht der Fig. 47, die eine Draufsicht auf die Schnittebene A-A aus Fig. 46 zeigt, ist der kreisförmige Querschnitt des Einklemmschutzprofils 302 zu erkennen und es ist auch zu erkennen, dass auf einer, dem Einklemmschutzprofil 302 zugewandten Oberseite des Trägers 304 mittels zweier leistenartiger Vorsprünge 306, 308 eine rinnenartige Anordnung ausgebildet ist, in die das Einklemmschutzprofil 302 eingelegt ist.

Dies ist genauer in den Darstellungen der Fig. 48 und 49 zu erkennen. Der Träger 304 weist eine plattenartige Grundform auf und die beiden, parallel zueinander verlaufenden und im Querschnitt annähernd dreieckförmigen Vorsprünge 306, 308 bilden eine Rinne, in die das im Querschnitt kreisrunde Einklemmschutzprofil 302 eingelegt ist. Zwischen den Vorsprüngen 306, 308 und einer Außenwandung des Einklemmschutzprofils 302 bilden sich dadurch zwei bandartige Kontaktflächen 310, 312 aus, in deren Bereich dann der Träger 304 und die Außenwandung des Einklemmschutzprofil 302 miteinander verschweißt werden. Eine Verschweißung mittels Laserlicht erfolgt von der Rückseite des Trägers 304 her, die dem Einklemmschutzprofil 302 abgewandt ist. Der Träger 304 bildet dann den Transmissionspartner der Verschweißung, das Einklemmschutzprofil 302 bildet den Absorptionspartner der Verschweißung.

In der Darstellung der Fig. 48 ist zu erkennen, dass zwischen den beiden bandartigen Kontaktflächen 310, 312 ein weiterer Bereich 314 ausgebildet ist, in dem die Außenwandung des Einklemmschutzprofils 302 auf dem Träger 304 aufliegt. Falls der Anwendungsfall eine besonders sichere Befestigung des Einklemmschutzprofils 302 erforderlich machen sollte, kann in diesem Bereich ebenfalls eine Verschweißung vorgenommen werden. Die spezielle, rinnenartige Formgebung des Trägers 304 im Bereich der beiden Vorsprünge 306, 308 erlaubt aber einen besonders sicheren Kontakt im Bereich der bandartigen Kontaktflächen 310, 312, so dass üblicherweise eine Verschweißung lediglich in diesen beiden Bereichen vorgenommen wird.

Die Darstellung der Fig. 49 zeigt die Einzelheit C aus Fig. 45 in vergrößerter Darstellung. Zu erkennen sind der Träger 304 mit den beiden leistenartigen Vorsprüngen 306, 308, die eine rinnenartige Anordnung bilden, in die das Einklemmschutzprofil 302 eingelegt ist. Das Einklemmschutzprofil 302 weist einen Hohlraum 316 auf, um den im Abstand von 120° drei elektrische Leiter 318, 320 und 322 angeordnet sind. Im Bereich der beiden Leiter 318, 320 ist noch jeweils eine Dratlitze 324 eingezeichnet. Wird das Einklemmschutzprofil 302 komprimiert, so verbindet der elektrische Leiter 322 die beiden Leiter 318, 320 und ein Schaltsignal kann erzeugt werden.

Das Einklemmschutzprofil 302 kann mit in seiner Längsrichtung geradlinig verlaufenden elektrische Leitern 318, 320, 322 versehen sein. Es sind auch Einklemmschutzprofile 302 bekannt, die wendelförmig verlaufende Leiter 318, 320, 322 aufweisen. Im Falle eines solchen Einklemmschutzprofils 302 mit wendelförmig verlaufenden Leitern ist die Winkelposition um die Längsachse des Einklemmschutzprofils 302 unbeachtlich und das Einklemmschutzprofil 302 kann in einer beliebigen Winkelposition in die Rinne zwischen den beiden Vorsprüngen 306, 308 eingelegt und dann mit den Vorsprüngen 306, 308 im Bereich der beiden bandartigen Kontaktflächen 310, 312 verschweißt werden.

## Patentansprüche

1. Verfahren zum Verbinden eines Einklemmschutzprofils (16; 66; 76; 86; 96; 126; 136; 146; 186; 196; 234; 246; 256; 270; 276; 302) aus gummielastischem Kunststoffmaterial mit einem Träger (20; 62; 68; 88; 98; 122; 132; 152; 172; 182; 198; 214; 236; 248; 258; 274; 304) aus Kunststoffmaterial, wobei das Einklemmschutzprofil wenigstens einem, in das Kunststoffmaterial eingebetteten elektrischen Leiter (30, 32; 92, 94, 100; 318, 320, 322) aufweist, mit den Schritten Fixieren des Einklemmschutzprofils und des Trägers, Ausüben einer Vorspannkraft auf Einklemmschutzprofil und Träger, so dass sich wenigstens eine bandartige Kontaktfläche (42, 44; 124, 127, 129; 288, 290; 310, 312) zwischen Einklemmschutzprofil und Träger ausbildet und Verschweißen des Einklemmschutzprofils und des Trägers mittels Laserlicht oder Ultraschall im Bereich der bandartigen Kontaktfläche (42, 44; 124, 127, 129; 288, 290; 310, 312).

2. Verfahren nach Anspruch 1, **dadurch gekennzeichnet, dass** die bandartige Kontaktfläche kleiner ist als eine Auflagefläche des Einklemmschutzprofils auf dem Träger vor dem Ausüben einer Vorspannkraft.

3. Verfahren nach Anspruch 1 oder 2, wobei das Einklemmschutzprofil eine in Längsrichtung durchlaufende Hohlkammer (34; 102; 316) aufweist, gekennzeichnet durch Ausbilden zweier bandartiger Kontaktflächen (42, 44; 124, 127, 129; 288, 290; 310, 312) im Bereich der seitlichen Ränder des Einklemmschutzprofils und Verschweißen von Einklemmschutzprofil und Träger im Bereich der beiden bandartigen Kontaktflächen.

4. Verfahren nach einem der vorstehenden Ansprüche, **dadurch** gekennzeichnet, dass das Einklemmschutzprofil (66; 76; 256; 270) im Bereich seiner Grundfläche mit wenigstens einem abragenden Vorsprung (70, 72; 78, 80; 260, 262) versehen ist, wobei die wenigstens eine bandartige Kontaktfläche zwischen dem Vorsprung (70, 72; 78, 80; 260, 262) und dem Träger (68; 266) ausgebildet wird.

5. Verfahren nach einem der vorstehenden Ansprüche, **dadurch** gekennzeichnet, **dass** zum Verschweißen Laserlicht mit einer Wellenlänge im Bereich zwischen 700nm und 1500nm, insbesondere 900nm bis 1200nm, verwendet wird.

6. Einklemmschutzprofil aus gummielastischem Kunststoffmaterial, wobei das Einklemmschutzprofil (16; 66; 76; 86; 96; 126; 136; 146; 186; 196; 234; 246; 256; 270; 276; 302) wenigstens zwei, in das Kunststoffmaterial eingebettete elektrische Leiter (30, 32; 92, 94, 100; 318, 320, 322) aufweist, wobei das Einklemmschutzprofil wenigstens in einem Bereich seiner Grundfläche, in dem beim Verbinden mit einem Träger eine bandartige Kontaktfläche (42, 44; 124, 127, 129; 288, 290; 310, 312) zwischen Einklemmschutzprofil und Träger (20; 62; 68; 88; 98; 122; 132; 152; 172; 182; 198; 214; 236; 248; 258; 274; 304) ausgebildet wird, aus einem thermoplastischen, mittels Laserlicht oder Ultraschall verschweißbaren Material besteht.

7. Einklemmschutzprofil nach Anspruch 6, **dadurch gekennzeichnet, dass** das Einklemmschutzprofil im Bereich seiner Grundfläche absorbierend für Laserlicht in einem Bereich zwischen 700 nm und 1500 nm, insbesondere 900nm bis 1200 nm, ausgebildet ist, wobei ein Transmissionsgrad des Einklemmschutzprofils im Bereich seiner Grundfläche kleiner als 1% ist.

8. Einklemmschutzprofil nach Anspruch 6 oder 7, **dadurch** gekennzeichnet, **dass** das Einklemmschutzprofil im Bereich seiner Grundfläche wenigstens einen abragenden Vorsprung (70, 72; 78, 80; 260, 262) aufweist, wobei die bandartige Kontaktfläche zwischen dem wenigstens einen Vorsprung und einem Träger ausgebildet wird.

9. Einklemmschutzprofil nach Anspruch 8, **dadurch gekennzeichnet,** dass der wenigstens eine Vorsprung (70, 72; 78, 80; 260, 262) im Bereich der Grundfläche seitlich und/oder nach unten abragt und wenigstens der Vorsprung aus für Laserlicht in einem Bereich zwischen 700nm und 1500nm, insbesondere 900nm bis 1200 nm, transparentem Material ausgebildet ist, wobei ein Transmissionsgrad des wenigstens einen Vorsprungs größer als 2% ist.

10. Einklemmschutzsystem mit einem Einklemmschutzprofil (16; 66; 76; 86; 96; 126; 136; 146; 186; 196; 234; 246; 256; 270; 276; 302) nach einem der vorstehenden Ansprüche und einem Träger (20; 62; 68; 88; 98; 122; 132; 152; 172; 182; 198; 214; 236; 248; 258; 274; 304), **dadurch gekennzeichnet, dass** das Einklemmschutzprofil und der Träger wenigstens im Bereich einer bandartigen Kontaktfläche (42, 44; 310, 312) zwischen Einklemmschutzprofil und Träger aus thermoplastischem Kunststoffmaterial bestehen und miteinander verschweißt sind.

11. Einklemmschutzsystem nach Anspruch 10, **dadurch** gekennzeichnet, dass das Einklemmschutzprofil (16; 66; 76; 86; 96; 126; 136; 146; 186; 196; 234; 246; 256; 270; 276; 302) oder der Träger (20; 62; 68; 88; 98; 122; 132; 152; 172; 182; 198; 214; 236; 248; 258; 274; 304) wenigstens im Bereich der bandartigen Kontaktfläche (42, 44; 310, 312) als Transmissionspartner der Verschweißung und aus für Laserlicht in einem Bereich zwischen 700nm und 1500nm, insbesondere 900nm bis 1200 nm, transparentem thermoplastischem Kunststoffmaterial ausgebildet ist, wobei ein Transmissionsgrad des Transmissionspartners größer als 2% ist, und dass der Träger beziehungsweise das Einklemmschutzprofil wenigstens im Bereich der bandartigen Kontaktfläche als Absorptionspartner der Verschweißung und aus für Laserlicht in einem Bereich zwischen 700 nm und 1500 nm, insbesondere 900nm bis 1200 nm, absorbierenden thermoplastischem Kunststoffmaterial ausgebildet ist, wobei ein Transmissionsgrad des Absorptionspartners kleiner als 1 % ist.

12. Einklemmschutzsystem nach Anspruch 10 oder 11, **dadurch** gekennzeichnet, dass der Träger (20; 62; 68; 88; 98; 122; 132; 152; 172; 182; 198; 214; 236; 248; 258; 274; 304) wenigstens abschnittsweise aus Polypropylen (PP), Acrylnitril-Butadien-Styrol (ABS), ABS mit Polycarbonat, Polycarbonat, Polybutylenterephtalat oder Polybutadienterephtalat (PBT), Hart-PVC oder Weich-PVC (Polyvinylchlorid) oder Polyamid (PA) gebildet ist und das Einklemmschutzprofil (16; 66; 76; 86; 96; 126; 136; 146; 186; 196; 234; 246; 256; 270; 276; 302) wenigstens abschnittsweise aus einem thermoplastischen Elastomer (TPE), Ethylen-Propylen-Kautschuk (EPM) oder Ethylen-Propylen-Dien-Kautschuk (EPDM) gebildet ist.

13. Einklemmschutzsystem nach wenigstens einem der Ansprüche 10 bis 12, **dadurch gekennzeichnet, dass** der Träger (248; 258) und/oder das Einklemmschutzprofil wenigstens abschnittsweise mit einem thermoplastischen, verschweißbaren Kunststoffmaterial, insbesondere einem thermoplastischen Elastomer (TPE), Polyamid (PA), Ethylenvinylacetat (EVA), Polyurethan (PU) oder Polypropylen (PP), beschichtet ist.

14. Einklemmschutzsystem nach einem der vorstehenden Ansprüche 10 bis 13 **dadurch gekennzeichnet, dass** die bandartige Kontaktfläche (42, 44; 124, 127, 129; 288, 290; 310, 312) und die Verschweißung zwischen Einklemmschutzprofil und Träger wenigstens eine geschlossene Bahn bilden.

15. Einklemmschutzsystem nach einem der Ansprüche 10 bis 14, **dadurch gekennzeichnet, dass** das Einklemmschutzprofil (186) mit wenigstens einer Kabelzuleitung (184) versehen ist, wobei eine Isolierung (194) der Kabelzuleitung (184) wenigstens abschnittsweise mit dem Träger (182) verschweißt ist.

## Claims

1. A method for joining an anti-pinch profile (16; 66; 76; 86; 96; 126; 136; 146; 186; 196; 234; 246; 256; 270; 276; 302) made of rubber-elastic synthetic material to a support (20; 62; 68; 88; 98; 122; 132; 152; 172; 182; 198; 214; 236; 248; 258; 274; 304) made of synthetic material, wherein the anti-pinch profile includes at least one electric conductor (30, 32; 92, 94, 100; 318, 320, 322) embedded into the synthetic material, comprising the steps of fixing the anti-pinch profile and the support, exerting a pre-tensioning force on anti-pinch profile and support, so that at least one strip-type contact surface (42, 44; 124, 127, 129; 288, 290; 310, 312) is formed between anti-pinch profile and support, and welding the anti-pinch profile and the support by means of laser radiation or ultrasonic radiation in the vicinity of the strip-type contact surface (42, 44; 124, 127, 129; 288, 290; 310, 312).

2. The method according to claim 1, **characterized in that** the strip-type contact surface is smaller than an application surface of the anti-pinch profile on the support before exerting a pre-tensioning force.

3. The method according to claim 1 or 2, wherein the anti-pinch profile has a hollow chamber (34; 102; 316) traversing in the longitudinal direction, **characterized by** forming two strip-type contact surfaces (42, 44; 124, 127, 129; 288, 290; 310, 312) in the vicinity of the lateral edges of the anti-pinch profile and welding of anti-pinch profile and support in the vicinity of the two strip-type contact surfaces.

4. The method according to any one of the preceding claims, **characterized in that** the anti-pinch profile (66; 76; 256; 270) is provided with at least one protruding projection (70, 72; 78, 80; 260, 262) in the vicinity of its base area, wherein the at least one strip-type contact surface is formed between the projection (70, 72; 78, 80; 260, 262) and the support (68; 266).

5. The method according to any one of the preceding claims, **characterized in that** laser radiation of a wavelength in the range between 700 nm and 1500 nm, in particular 900 nm to 1200 nm, is used for welding.

6. An anti-pinch profile made of rubber-elastic synthetic material, wherein the anti-pinch profile (16; 66; 76; 86; 96; 126; 136; 146; 186; 196; 234; 246; 256; 270; 276; 302) has at least two electric conductors (30, 32; 92, 94, 100; 318, 320, 322) embedded into the synthetic material, wherein the anti-pinch profile is made of a thermoplastic material that is weldable by means of laser radiation or ultrasonic radiation, at least in a vicinity of its base area where during joining to a support a strip-type contact surface (42, 44; 124, 127, 129; 288, 290; 310, 312) is formed between anti-pinch profile and support (20; 62; 68; 88; 98; 122; 132; 152; 172; 182; 198; 214; 236; 248; 258; 274; 304).

7. The anti-pinch profile according to claim 6, **characterized in that** the anti-pinch profile in the vicinity of its base area is capable of absorbing laser radiation in a range between 700 nm and 1500 nm, in particular 900 nm to 1200 nm, wherein a transmission factor of the anti-pinch profile in the vicinity of its base area is less than 1 %.

8. The anti-pinch profile according to claim 6 or 7, **characterized in that** the anti-pinch profile in the vicinity of its base area has at least one protruding projection (70, 72; 78, 80; 260, 262), wherein the strip-type contact surface is formed between the at least one projection and a support.

9. The anti-pinch profile according to claim 8, **characterized in that** the at least one projection (70, 72; 78, 80; 260, 262) in the vicinity of the base area protrudes laterally and/or downwards and at least the projection is made of material that is transparent for laser radiation in a range between 700 nm and 1500 nm, in particular 900 nm to 1200 nm, wherein a transmission factor of the at least one projection is greater than 2 %.

10. An anti-pinch system including an anti-pinch profile (16; 66; 76; 86; 96; 126; 136; 146; 186; 196; 234; 246; 256; 270; 276; 302) according to any one of the preceding claims and a support (20; 62; 68; 88; 98; 122; 132; 152; 172; 182; 198; 214; 236; 248; 258; 274; 304) **characterized in that** the anti-pinch profile and the support at least in the vicinity of a strip-type contact surface (42, 44; 310, 312) between anti-pinch profile and support are made of thermoplastic synthetic material and welded to each other.

11. The anti-pinch system according to claim 10, **characterized in that** the anti-pinch profile (16; 66; 76; 86; 96; 126; 136; 146; 186; 196; 234; 246; 256; 270; 276; 302) or the support (20; 62; 68; 88; 98; 122; 132; 152; 172; 182; 198; 214; 236; 248; 258; 274; 304) at least in the vicinity of the strip-type contact surface (42, 44; 310, 312) is a transmission partner for welding and made of thermoplastic synthetic material that is transparent for laser radiation in a range between 700 nm and 1500 nm, in particular 900 nm to 1200 nm, wherein a transmission factor of the transmission partner is greater than 2 %, and **in that** the support and the anti-pinch profile, respectively, are at least in the vicinity of the strip-type contact surface an absorption partner for welding and made of thermoplastic synthetic material that is capable of absorbing laser radiation in a range between 700 nm and 1500 nm, in particular 900 nm to 1200 nm, wherein a transmission factor of the absorption partner is less than 1 %.

12. The anti-pinch system according to claim 10 or 11, **characterized in that** the support (20; 62; 68; 88; 98; 122; 132; 152; 172; 182; 198; 214; 236; 248; 258; 274; 304) at least in sections is made of polypropylene (PP), acrylonitrile-butadiene-styrene (ABS), ABS plus polycarbonate, polycarbonate, polybutylene terephthalate or polybutadiene terephthalate (PBT), rigid PVC or flexible PVC (polyvinyl chloride), or polyamide (PA), and the anti-pinch profile (16; 66; 76; 86; 96; 126; 136; 146; 186; 196; 234; 246; 256; 270; 276; 302) at least in sections is made of a thermoplastic elastomer (TPE), ethylene propylene rubber (EPM) or ethylene propylene diene rubber (EPDM).

13. The anti-pinch system according to at least one of the claims 10 to 12, **characterized in that** the support (248; 258) and/or the anti-pinch profile are/is coated at least in sections with a thermoplastic, weldable synthetic material, in particular a thermoplastic elastomer (TPE), polyamide (PA), ethylene vinyl acetate (EVA), polyurethane (PU) or polypropylene (PP).

14. The anti-pinch system according to any one of the preceding claims 10 to 13, **characterized in that** the strip-type contact surface (42, 44; 124, 127, 129; 288, 290; 310, 312) and the welded joint between anti-pinch profile and support are forming at least one closed track.

15. The anti-pinch system according to any one of the claims 10 to 14, **characterized in that** the anti-pinch profile (186) is provided with at least one cable supply line (184), wherein an insulation (194) of the cable supply line (184) is welded to the support (182) at least in sections.

## Revendications

1. Procédé de fixation d'un profilé anti-pincement (16; 66; 76; 86; 96; 126; 136; 146; 186; 196; 234; 246; 256; 270; 276; 302) en matériau en plastique ayant l'élasticité du caoutchouc à un support (20; 62; 68; 88; 98; 122; 132; 152; 172; 182; 198; 214; 236; 248; 258; 274; 304) en matériau en plastique, le profilé anti-pincement présentant au moins un conducteur électrique (30, 32; 92, 94, 100; 318, 320, 322) noyé dans le matériau en plastique, comprenant les étapes de fixation du profilé anti-pincement et du support, d'application d'une force de précontrainte sur le profilé anti-pincement et le support, de telle sorte qu'au moins une surface de contact de type bande (42, 44; 124, 127, 129; 288, 290; 310, 312) soit réalisée entre le profilé anti-pincement et le support, et de soudage du profilé anti-pincement et du support au moyen de lumière laser ou d'ultrasons dans la région de la surface de contact de type bande (42, 44; 124, 127, 129; 288, 290; 310, 312).

2. Procédé selon la revendication 1, **caractérisé en ce que** la surface de contact de type bande est inférieure à une surface d'appui du profilé anti-pincement sur le support avant l'application d'une force de précontrainte.

3. Procédé selon la revendication 1 ou 2, dans lequel le profilé anti-pincement présente une chambre creuse (34; 102; 316) s'étendant dans la direction longitudinale, **caractérisé par** la réalisation de deux surfaces de contact de type bande (42, 44; 124, 127, 129; 288, 290; 310, 312) dans la région des bords latéraux du profilé anti-pincement et le soudage du profilé anti-pincement et du support dans la région des deux surfaces de contact de type bande.

4. Procédé selon l'une quelconque des revendications précédentes, **caractérisé en ce que** le profilé anti-pincement (66; 76; 256; 270) est pourvu dans la région de sa surface de base d'au moins une projection faisant saillie (70, 72; 78, 80; 260, 262), l'au moins une surface de contact de type bande étant réalisée entre la projection (70, 72; 78, 80; 260, 262) et le support (68; 266).

5. Procédé selon l'une quelconque des revendications précédentes, **caractérisé en ce que** pour le soudage, on utilise de la lumière laser ayant une longueur d'onde dans une plage comprise entre 700 nm et 1500 nm, en particulier entre 900 nm et 1200 nm.

6. Profilé anti-pincement constitué d'un matériau en plastique ayant l'élasticité du caoutchouc, le profilé anti-pincement (16; 66; 76; 86; 96; 126; 136; 146; 186; 196; 234; 246; 256; 270; 276; 302) présentant au moins deux conducteurs électriques (30, 32; 92, 94, 100; 318, 320, 322) noyés dans le matériau en plastique, le profilé anti-pincement, au moins dans une région de sa surface de base dans laquelle, lors de la fixation à un support, une surface de contact de type bande (42, 44 ; 124, 127, 129; 288, 290; 310, 312) est réalisée entre le profilé anti-pincement et le support (20; 62; 68; 88; 98; 122; 132; 152; 172; 182; 198; 214; 236; 248; 258; 274; 304), se composant d'un matériau thermoplastique pouvant être soudé au moyen de lumière laser ou d'ultrasons.

7. Profilé anti-pincement selon la revendication 6, **caractérisé en ce que** le profilé anti-pincement, dans la région de sa surface de base, est réalisé de manière à absorber la lumière laser dans une plage comprise entre 700 nm et 1500 nm, en particulier 900 nm et 1200 nm, un degré de transmission du profilé anti-pincement dans la région de sa surface de base étant inférieur à 1 %.

8. Profilé anti-pincement selon la revendication 6 ou 7, **caractérisé en ce que** le profilé anti-pincement, dans la région de sa surface de base, présente au moins une projection faisant saillie (70, 72; 78, 80; 260, 262), la surface de contact de type bande étant réalisée entre l'au moins une projection et un support.

9. Profilé anti-pincement selon la revendication 8, **caractérisé en ce que** l'au moins une projection (70, 72; 78, 80; 260, 262) fait saillie latéralement et/ou vers le bas dans la région de la surface de base et au moins la projection est réalisée en matériau transparent à la lumière laser dans une plage comprise entre 700 nm et 1500 nm, en particulier 900 nm et 1200 nm, un degré de transmission de l'au moins une projection étant supérieur à 2 %.

10. Système anti-pincement comprenant un profilé anti-pincement (16; 66; 76; 86; 96; 126; 136; 146; 186; 196; 234; 246; 256; 270; 276; 302) selon l'une quelconque des revendications précédentes, et un support (20; 62; 68; 88; 98; 122; 132; 152; 172; 182; 198; 214; 236; 248; 258; 274; 304), **caractérisé en ce que** le profilé anti-pincement et le support, au moins dans la région d'une surface de contact de type bande (42, 44; 310, 312) entre le profilé anti-pincement et le support, se composent de matériau en plastique thermoplastique et sont soudés l'un à l'autre.

11. Système anti-pincement selon la revendication 10, **caractérisé en ce que** le profilé anti-pincement (16; 66; 76; 86; 96; 126; 136; 146; 186; 196; 234; 246; 256; 270; 276; 302) ou le support (20; 62; 68; 88; 98; 122; 132; 152; 172; 182; 198; 214; 236; 248; 258; 274; 304), au moins dans la région de la surface de contact de type bande (42, 44; 310, 312), est réalisé sous forme de partenaire de transmission du soudage et en un matériau en plastique thermoplastique transparent à la lumière laser dans une plage comprise entre 700 nm et 1500 nm, en particulier 900 nm et 1200 nm, un degré de transmission du partenaire de transmission étant supérieur à 2 %, et **en ce que** le support ou le profilé anti-pincement, au moins dans la région de la surface de contact de type bande, est réalisé sous forme de partenaire d'absorption du soudage et en un matériau en plastique thermoplastique absorbant la lumière laser dans une plage comprise entre 700 nm et 1500 nm, en particulier 900 nm et 1200 nm, un degré de transmission du partenaire d'absorption étant inférieur à 1 %.

12. Système anti-pincement selon la revendication 10 ou 11, **caractérisé en ce que** le support (20; 62; 68; 88; 98; 122; 132; 152; 172; 182; 198; 214; 236; 248; 258; 274; 304) est formé au moins en partie de polypropylène (PP), d'acrylonitrile-butadiène-styrène (ABS), d'ABS avec du polycarbonate, de polycarbonate, de téréphtalate de polybutylène ou de téréphtalate de polybutadiène (PBT), de PVC dur ou de PVC mou (chlorure de polyvinyle) ou de polyamide (PA) et le profilé anti-pincement (16; 66; 76; 86; 96; 126; 136; 146; 186; 196; 234; 246; 256; 270; 276; 302) est formé au moins en partie d'un élastomère thermoplastique (TPE), de caoutchouc éthylène-propylène (EPM) ou de caoutchouc éthylène-propylènediène (EPDM).

13. Système anti-pincement selon au moins l'une quelconque des revendications 10 à 12, **caractérisé en ce que** le support (248; 258) et/ou le profilé anti-pincement est/sont revêtu(s) au moins en partie avec un matériau en plastique thermoplastique soudable, en particulier un élastomère thermoplastique (TPE), un polyamide (PA), de l'acétate d'éthylènevinyle (EVA), du polyuréthane (PU) ou du polypropylène (PP).

14. Système anti-pincement selon l'une quelconque des revendications précédentes 10 à 13, **caractérisé en ce que** la surface de contact de type bande (42, 44; 124, 127, 129; 288, 290; 310, 312) et le soudage entre le profilé anti-pincement et le support forment au moins une bande fermée.

15. Système anti-pincement selon l'une quelconque des revendications 10 à 14, **caractérisé en ce que** le profilé anti-pincement (186) est pourvu d'au moins une amenée de câble (184), une isolation (194) de l'amenée de câble (184) étant soudée au moins en partie au support (182).
